(19) **Europäisches Patentamt / European Patent Office / Office européen des brevets**

(11) **EP 4 064 496 B1**

(12) # EUROPEAN PATENT SPECIFICATION

(45) Date of publication and mention
of the grant of the patent:
**11.03.2026 Bulletin 2026/11**

(21) Application number: **21809513.1**

(22) Date of filing: **19.05.2021**

(51) International Patent Classification (IPC):
***H02J 3/18*** *(2026.01)*

(52) Cooperative Patent Classification (CPC):
**H02J 3/1857;** H02J 3/0012; Y02E 40/20;
Y02E 40/40

(86) International application number:
**PCT/CN2021/094665**

(87) International publication number:
**WO 2021/233347 (25.11.2021 Gazette 2021/47)**

(54) **POWER QUALITY GRADE DETERMINATION METHOD AND APPARATUS IN POWER GRID, DEVICE AND STORAGE MEDIUM**

STROMQUALITÄTSBESTIMMUNGSVERFAHREN UND -VORRICHTUNG IN EINEM STROMNETZ, VORRICHTUNG UND SPEICHERMEDIUM

PROCÉDÉ ET APPAREIL DE DÉTERMINATION DE QUALITÉ DE PUISSANCE DANS UN RÉSEAU ÉLECTRIQUE, DISPOSITIF ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2020 CN 202010425587**

(43) Date of publication of application:
**28.09.2022 Bulletin 2022/39**

(73) Proprietors:
- **China Crec Railway Electrification Bureau Group**
  **Fengtai District Beijing 100036 (CN)**
- **Fuzhou University**
  **Fuzhou, Fujian 350108 (CN)**

(72) Inventors:
- **DOU, Baoxin**
  **Beijing 100036 (CN)**
- **XU, Yonglie**
  **Beijing 100036 (CN)**
- **LIN, Yunzhi**
  **Beijing 100036 (CN)**
- **JIN, Tao**
  **Fuzhou, Fujian 350108 (CN)**
- **YU, Gang**
  **Beijing 100036 (CN)**

- **ZHOU, Wenzhao**
  **Beijing 100036 (CN)**
- **LUO, Bing**
  **Beijing 100036 (CN)**

(74) Representative: **Marks & Clerk LLP**
**15 Fetter Lane**
**London EC4A 1BW (GB)**

(56) References cited:
EP-A2- 2 472 693        WO-A1-95/01002
CN-A- 105 703 648       CN-A- 108 039 707
CN-A- 110 912 150       CN-A- 111 106 606
CN-A- 111 525 572       JP-A- H10 262 337

- CUI GUIPING ET AL: "YN/VD connected balance transformer-based hybrid power quality compensator for harmonic suppression and reactive power compensation of electrical railway power systems", INTERNATIONAL JOURNAL OF ELECTRICAL POWER & ENERGY SYSTEMS, vol. 113, 1 June 2019 (2019-06-01), pages 481 - 491, XP085724312, ISSN: 0142-0615, DOI: 10.1016/J.IJEPES.2019.05.067

- WANG YINGPIN: "Key Technologies Research on Unified Power Quality Conditioner (UPQC)", CHINESE DOCTORAL DISSERTATIONS FULL-TEXT DATABASE, 18 January 2019 (2019-01-18), pages 1 - 175, XP055870066

- GUO HEXIANG: "Research on Unified Power Quality Conditioner and Its Comprehensive Detection Method", CHINESE MASTER'S THESES FULL-TEXT DATABASE, 15 January 2018 (2018-01-15), pages 1 - 82, XP055870080

## Description

### TECHNICAL FIELD

The present application relates to the technical field of power grid control, and in particular, to a power quality level determining method and apparatus for a power grid.

### BACKGROUND

At present, active power filters (APFs) are widely used in three-phased systems, to reduce harmonic pollution and improve power quality. The active power filter may be regarded as a controlled current source injecting a harmonic current opposite to the harmonic current generated by power electronic equipment and a nonlinear load, thereby effectively reducing distortions in current and voltage waveforms.

In the traditional technology, the harmonic current detected by a *dq0* transformation method is compared with an actual compensating current, and the comparison result of them is used as an input of a hysteresis comparator, which will generate a PWM signal controlling a switch to be turned on or off, thereby adjusting the compensating current. The harmonic voltage detected by the *dq0* transformation method generates a PWM signal, and then the PWM signal is input into a serial active power filter to control the switch in the inverter to be turned on or off, so that a compensating voltage signal is outputted and injected into the power grid to compensate the harmonic voltage.

However, in the traditional technology, the harmonic current detected by the *dq0* transformation method is compensated by the hysteresis comparator, and the harmonic voltage detected by the *dq0* transformation method is compensated by the parallel active power filter, which will result in low compensation accuracy of the harmonic voltage and harmonic current. Document JP H10262337A discloses an active harmonic suppression device.

### SUMMARY

In view of the above technical problems, it is necessary to provide a power quality level determining method and apparatus for the power grid, a device, and a storage medium, which may improve the compensation accuracy of the harmonic voltage and harmonic current in the power grid.

The invention is defined by the features of the independent claims. Preferred embodiments are defined in the dependent claims.

In the power quality level determining method and apparatus for the power grid, the 69269236-1 device, and the storage medium above, first, the harmonic current to be compensated and the harmonic voltage to be compensated in the power grid are obtained; then the current adjustment processing is performed on the harmonic current to be compensated according to the compared result of the harmonic current to be compensated and the actual compensating current, and the voltage adjustment processing is performed on the harmonic voltage to be compensated according to the harmonic voltage to be compensated and the pre-obtained object switch actuation duration, to obtain the adjusted harmonic current and the adjusted harmonic voltage. In this way, the adjustment of the harmonic current is realized through the compared result of the harmonic current to be compensated and the actual compensating current, and the adjustment of the harmonic voltage is realized through the harmonic voltage to be compensated and the object switch actuation duration, which avoids the problems of low compensation accuracy of the harmonic voltage and the harmonic current and large amount of computation in the traditional technology, which are caused by compensating, by a hysteresis comparator, the harmonic current detected by the *dq0* transformation method, and which are caused by compensating, by the serial active power filter, the harmonic voltage detected by the *dq0* transformation method, thereby improving the compensation accuracy and compensation speed of the harmonic current and the harmonic voltage. Further, the object power quality level for the power grid is determined according to the adjusted harmonic current and the adjusted harmonic voltage, so as to achieve the objective of obtaining the object power quality level corresponding to the adjusted harmonic current and the adjusted harmonic voltage, and may also achieve the objective that when the object power quality level is higher, the compensation accuracy of the adjusted harmonic current and the adjusted harmonic voltage which are obtained are higher, thereby improving the accuracy and reliability of obtaining the adjusted harmonic current and the adjusted harmonic voltage.

### BRIEF DESCRIPTION OF THE DRAWINGS

FIG. 1 is a schematic flowchart of a power quality level determining method for a power grid according to an embodiment;

FIG. 2 is a schematic flowchart of the power quality level determining method for the power grid according to another embodiment;

FIG. 3 is a schematic diagram illustrating a harmonic current compensation performed by a hysteresis controller controlling a current compensation inverter according to an embodiment;

FIG. 4 is a schematic flowchart of the power quality level determining method for the power grid according to yet another embodiment;

FIG. 5 is a circuit diagram of an active power filter according to an embodiment;

FIG. 6A is a spatial vector diagram illustrating 27 vectors of three-level 3D-SVPWM according to an embodiment;

FIG. 6B is a schematic diagram illustrating 27 space vectors in an $\alpha\beta$ coordinate system and in an $gh$ coordinate system according to an embodiment;

FIG. 7 is a schematic flowchart of the power quality level determining method for the power grid according to yet another embodiment;

FIG. 8 is a schematic flowchart of the power quality level determining method for the power grid according to yet another embodiment;

FIG. 9 is a schematic flowchart of the power quality level determining method for the power grid according to yet another embodiment;

FIG. 10 is a schematic flowchart of the power quality level determining method for the power grid according to yet another embodiment;

FIG. 11 is a block diagram illustrating a power quality level determining apparatus for the power grid according to an embodiment;

FIG. 12 is a diagram illustrating an internal structure of a computer device according to an embodiment.

## DETAILED DESCRIPTION OF THE EMBODIMENTS

In order to make the objectives, technical solutions and advantages of the present application clearer and better understood, the present application will be further described in detail herein with reference to the accompanying drawings and embodiments. It should be understood that the specific embodiments described herein are only used to explain the present application, but not intended to limit the present application.

The subject executing the power quality level determining method for the power grid provided by the present application may be a power quality level determining apparatus for the power grid, and the power quality level determining apparatus for the power grid may be realized by software, hardware, or a combination of software and hardware, and becomes part or all of the computer device. Optionally, the computer device may be a personal computer (PC), a portable device, a notebook computer, a smart phone, a tablet computer, a portable wearable device, or any other electronic device provided with a built-in power quality adjustment system such as a tablet computer or a mobile phone, etc., the embodiments of the present application do not limit the specific forms of the computer device.

It should be noted that, the subject executing the following method embodiments may be part or all of the above-mentioned computer device. The following method embodiments are described by taking the computer device being the subject executing the method as an example.

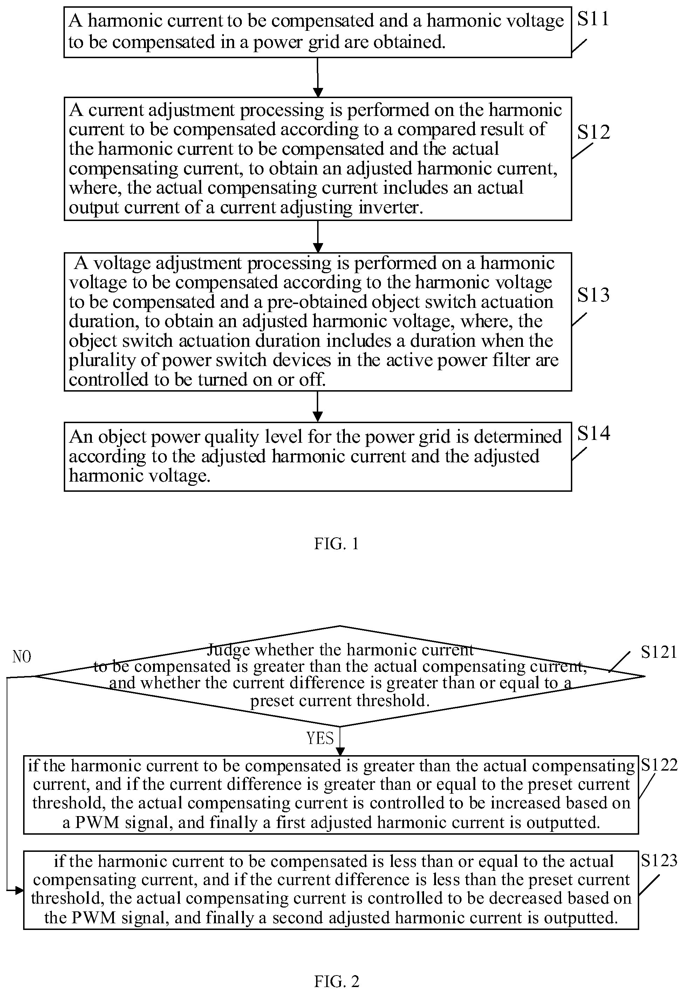

In an embodiment, as shown in FIG. 1, a power quality level determining method for a power grid is provided, and includes the following steps.

At Step S11, a harmonic current to be compensated and a harmonic voltage to be compensated in a power grid are obtained.

Where, the harmonic current to be detected may be a harmonic current detected according to an *FBD* method, and the harmonic voltage to be compensated may be a harmonic voltage detected according to a *dq0* method.

Specifically, when the computer device detects the harmonic current by the *FBD* method, a load in an actual circuit may be equivalent to an ideal conductance element, and it is assumed that the power in the actual circuit may be consumed by the ideal conductance element, and other power, consumed by a transmission circuit, switch elements, etc., is not changed. Then a product of the equivalent conductance of the ideal conductance element and each of three phases reference voltages generated by a phase-lock loop is used as the current to be compensated.

Moreover, when the computer device detects the harmonic voltage by the *dq0* method, firstly, a d-axis positive-sequence component in the *dq0* coordinate system obtained by transforming the positive-sequence component of the three phases voltages, and a q-axis positive-sequence component in the *dq0* coordinate system obtained by transforming the three phases voltages, may be determined according to the n-order positive-sequence harmonic amplitude of the harmonic voltage and the n-order negative-sequence harmonic amplitude of the harmonic voltage in the power grid, and according to the n-order positive-sequence harmonic initial phase of the harmonic voltage and the n-order negative-sequence harmonic initial phase of the harmonic voltage in the power grid. Then, a low-pass filtering and a *dq0* inverse change are performed in sequence on the d-axis positive-sequence component and the q-axis positive-sequence component, respectively, to obtain the three phases fundamental voltage positive-sequence components in the power grid. Finally, the voltage to be compensated is obtained according to the three phases power supply voltages and the three phases fundamental voltage positive-sequence components in the power grid.

At Step S12, a current adjustment processing is performed on the harmonic current to be compensated according to a compared result of the harmonic current to be compensated and the actual compensating current, to obtain an adjusted harmonic current, where, the actual compensating current includes an actual output current of a current adjusting inverter.

Specifically, the computer device may input the harmonic current to be compensated and the actual compensating current into the hysteresis comparator to adjust the harmonic current. The harmonic current to be compensated may include the three phases harmonic currents to be compensated, and the actual compensating current may also include actual three phases compensating currents. The loop width of the hysteresis comparator is 2h, and the differences between the three phases harmonic currents to be compensated and corresponding actual three phases compensating currents are regarded as three phases current deviations. When the three phases current deviations each are greater than (or less than) h, the hysteresis controller controls the power device in the upper (or lower) bridge arm of the a/b/c phase of the current compensating inverter to act, and the specific adjustment process is shown in FIG. 2 and includes the following sub-steps.

At Step S121, it is judged whether the harmonic current to be compensated is greater than the actual compensating current, and whether the current difference between the harmonic current to be compensated and the actual compensating current is greater than or equal to a preset current threshold.

Where, the preset current threshold may include a half loop width of the hysteresis comparator.

Specifically, the computer device, by judging a magnitude relationship between the harmonic current to be compensated and the actual compensating current, and judging a magnitude relationship between the current difference and the preset current threshold, may determine to control the hysteresis comparator to drive the power device in the upper bridge arm of the a/b/c phase of the current compensating inverter to act, or determine to control the hysteresis comparator to drive the power device in the lower bridge arm of the a/b/c phase of the current compensating inverter to act, thereby realizing the compensation for the harmonic current to be compensated by means of increasing or decreasing the actual compensating current.

During an actual processing, if the harmonic current to be compensated is greater than the actual compensating current, and if the current difference is greater than or equal to the preset current threshold, go to step S122. Otherwise, if the harmonic current to be compensated is less than or equal to the actual compensating current, and if the current difference is less than the preset current threshold, go to step S123.

At Step S122, if the harmonic current to be compensated is greater than the actual compensating current, and if the current difference is greater than or equal to the preset current threshold, the actual compensating current is controlled to be increased based on a PWM signal, and finally a first adjusted harmonic current is outputted. Where, the first adjusted harmonic current includes a current outputted when the harmonic current to be compensated is adjusted to increase to be a first preset current threshold, and the PWM signal is a signal generated by the hysteresis comparator after the harmonic current to be compensated and the actual compensating current are inputted into the hysteresis comparator.

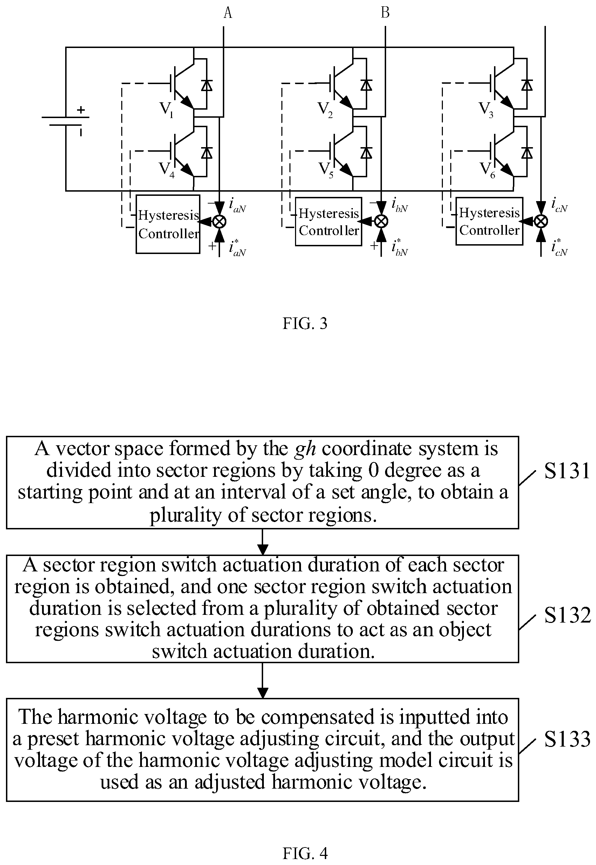

Specifically, as shown in FIG. 3, the computer device may realize the compensation operation for the harmonic current by controlling the hysteresis controller to drive the power device in the upper bridge arm of the a/b/c phase of the current compensating inverter to act, that is, the hysteresis controller outputs a positive level according to the PWM signal, to drive the power device in the upper bridge arm to be turned on, and the voltage and frequency transformer outputs a positive voltage, so that the actual compensating current increases. When the actual compensating current increases to the same as the harmonic current to be compensated, although the sign of the input signal of the hysteresis comparator changes, the hysteresis controller still maintains an output of the positive level, and the power device in the upper bridge arm is still on, so that the actual compensating current continues to increase until the actual compensating current is equal to the sum of the preset current threshold and the harmonic current to be compensated, the hysteresis controller turns over, and a negative level is outputted, and the power device in the upper bridge arm is turned off and the power device in the lower bridge arm is turned on. After the harmonic current of the inverter is compensated, the harmonic current component in the computer device is reduced, so that the first adjusted harmonic current is finally outputted.

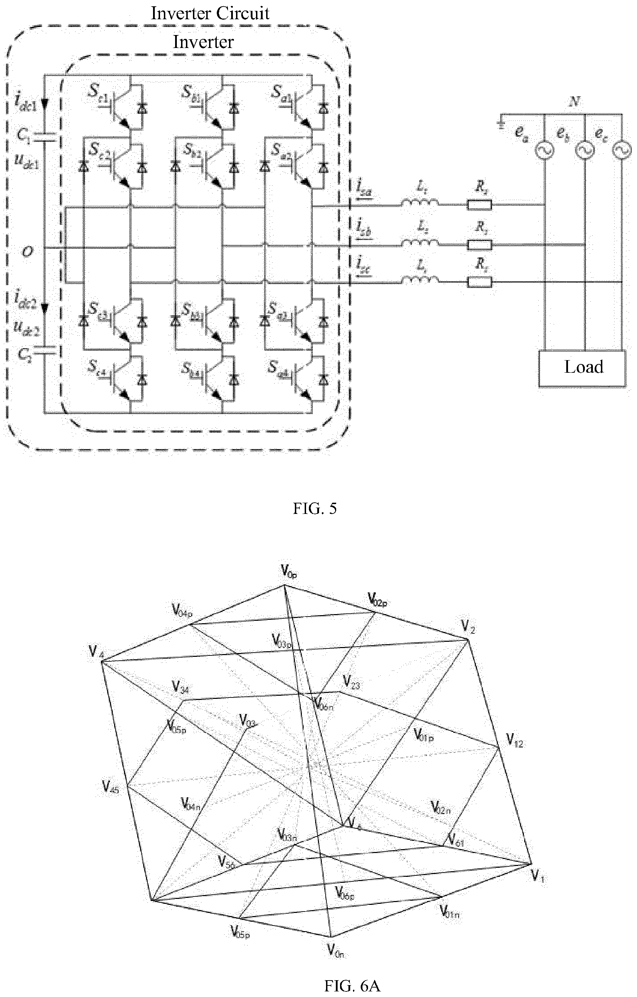

During the actual processing, the first adjusted harmonic current outputted by the computer device includes the result obtained by using $i^* + \int_0^t \left( V_{dc} / L_s \right) dt$. Where, i* denotes the compensating current used at the moment of switching the hysteresis control, $V_{dc}$ denotes a voltage across the DC side capacitor in the inverter circuit, and $L_s$ denotes a filter inductance used for compensating the harmonic current. Optionally, the inverter circuit may include a circuit shown in FIG.5, which is composed of device combinations of 12 groups of insulated gate bipolar transistors (IGBTs), power conduction diodes, and antiparallel diodes, and two capacitors $C_1$ and $C_2$.

At Step S123, if the harmonic current to be compensated is less than or equal to the actual compensating current, and if the current difference is less than the preset current threshold, the actual compensating current is controlled to be decreased based on the PWM signal, and finally a second adjusted harmonic current is outputted. The second adjusted harmonic current includes a current outputted when the harmonic current to be compensated is adjusted to decrease to a second preset current threshold.

Specifically, as shown in FIG. 3, the computer device may realize the compensation operation for the harmonic current by controlling the hysteresis controller to drive the power device in the lower bridge arm of the a/b/c phase of the current compensating inverter to act, that is, the hysteresis controller outputs a negative level according to the PWM signal, to drive the power device in the lower bridge arm to be turned on, and the voltage and frequency transformer outputs a negative voltage, so that the actual compensating current decreases. When the actual compensating current decreases to be the same as the harmonic current to be compensated, although the sign of the input signal of the hysteresis comparator changes, the hysteresis controller still maintains an output of a negative level, and the power device in the lower bridge arm is still on, so that the actual compensating current continues to decrease until the actual compensating current is equal to a difference between the preset current threshold and the harmonic current to be compensated, the hysteresis controller turns over, and a positive level is outputted, and the power device in the lower bridge arm is turned off and the power device in the upper bridge arm is turned on. After the harmonic current of the inverter is compensated, the harmonic current component in the system is reduced.

During the actual processing, the second adjusted harmonic current outputted by the computer device includes the result obtained by using $i^{*} - \int_{0}^{t} \left( V_{dc} / L_{s} \right) dt$ . Through the adjustment processes for the first adjusted harmonic current and for the second adjusted harmonic current, the harmonic current component in the computer device can be effectively reduced, so that the accuracy and reliability of the effective current in the computer device can also be effectively improved.

At Step S13, a voltage adjustment processing is performed on a harmonic voltage to be compensated according to the harmonic voltage to be compensated and a pre-obtained object switch actuation duration, to obtain an adjusted harmonic voltage. Where, the object switch actuation duration includes a duration when the plurality of groups of power switch devices in the active power filter are controlled to be turned on or off.

Specifically, as shown in FIG.4, the process of the computer device performing voltage adjustment processing on the harmonic voltage to be compensated includes following sub-steps.

At Step S131, a vector space formed by the *gh* coordinate system is divided into sector regions by taking 0 degree as a starting point and at an interval of a set angle, to obtain a plurality of sector regions.

Specifically, the computer device may divide the vector space formed by the *gh* coordinate system into the sector regions by taking 0 degree as the starting point and at the interval of a set angle of 60 degrees, to obtain a sector region I , a sector region II, a sector region III, a sector region IV, a sector region V , and a sector region VI.

During the actual processing, the computer device may first divide the vector space into 36 sector regions according to a 2D-SVPWM method, and wholly calculate an actuation duration of each vector, and then calculate actuation durations of positive and negative small vectors according to voltage zero-sequence components, and finally obtain the actuation duration of each switch. After induction, it is found that the actuation duration may be calculated according to 12 sector regions divided according to a phase of a reference vector, so the division for the sub-sector regions may be omitted, thereby reducing amount of calculation, and eliminating division errors of the sub-sector regions. The voltage across the DC side capacitor indirectly controls a balance of the upper and lower voltages by means of the zero-sequence component. The output of the converter is connected to the power grid by means of a filter inductor. Each phase is provided with four switches and six diodes, and two capacitors are arranged on the DC side.

In the filter shown in FIG. 5, following equations may be obtained:

$$
\begin{cases}
L_s \dfrac{di_{sa}}{dt} = -R_s i_{sa} - S_{ua} u_{dc1} + S_{da} u_{dc2} + e_a \\[2mm]
L_s \dfrac{di_{sb}}{dt} = -R_s i_{sb} - S_{ub} u_{dc1} + S_{db} u_{dc2} + e_b \\[2mm]
L_s \dfrac{di_{sc}}{dt} = -R_s i_{sc} - S_{uc} u_{dc1} + S_{dc} u_{dc2} + e_c \qquad (1) \\[2mm]
C_1 \dfrac{du_{dc1}}{dt} = S_{ua} i_{sa} + S_{ub} i_{sb} + S_{uc} i_{sc} \\[2mm]
C_2 \dfrac{du_{dc2}}{dt} = -S_{ua} i_{sa} - S_{ub} i_{sb} - S_{uc} i_{sc}
\end{cases}
$$

In Equation (1), $L_s$ denotes filter inductance, $R_s$ denotes parasitic resistance of the inductor. $S_{ua}$, $S_{ub}$, and $S_{uc}$, denote switching states of the upper bridge arms of the $a$, $b$, and $c$ phases, respectively. $S_{da}$, $S_{db}$, and $S_{dc}$ denote switching states of the lower bridge arms of the $a$, $b$, and $c$ phases, respectively. $e_a$, $e_b$, and $e_c$ denote three phases reference voltages of the phase-lock loop at the moment $t$, respectively. $C_1$ and $C_2$ denote DC side capacitance, respectively. $u_{dc1}$ and $u_{sc2}$ denote corresponding voltages across $C_1$ and $C_2$, respectively. $i_{sa}$, $i_{sb}$ and $i_{sc}$ denote the currents (a direction pointing the inverter is a positive direction) in branches where filter inductors of the $a$, $b$, and $c$ phases are located. The equation is obtained by a Clarke transformation converted from the $abc$ coordinate system to the $a, \beta 0$ coordinate system:

$$
\begin{bmatrix}
L_s \dfrac{di_{s\alpha}}{dt} \\[2mm]
L_s \dfrac{di_{s\beta}}{dt} \\[2mm]
L_s \dfrac{di_{s0}}{dt} \\[2mm]
C_1 \dfrac{du_{dc1}}{dt} \\[2mm]
C_2 \dfrac{du_{dc2}}{dt}
\end{bmatrix}
=
\begin{bmatrix}
-R_s & 0 & 0 & -S_{u\alpha} & S_{d\alpha} \\[2mm]
0 & -R_s & 0 & -S_{u\beta} & S_{d\beta} \\[2mm]
0 & 0 & -R_s & 0 & 0 \\[2mm]
\dfrac{3}{2}S_{u\alpha} & \dfrac{3}{2}S_{u\beta} & 3S_{u0} & 0 & 0 \\[2mm]
-\dfrac{3}{2}S_{d\alpha} & -\dfrac{3}{2}S_{d\beta} & -3S_{u0} & 0 & 0
\end{bmatrix}
\begin{bmatrix}
i_{s\alpha} \\[2mm]
i_{s\beta} \\[2mm]
i_{s0} \\[2mm]
u_{dc1} \\[2mm]
u_{dc2}
\end{bmatrix}
+
\begin{bmatrix}
e_\alpha \\[2mm]
e_\beta \\[2mm]
e_0 \\[2mm]
0 \\[2mm]
0
\end{bmatrix}
\qquad (2)
$$

In Equation (2), $S_{u\alpha}$, $S_{u\beta}$, and $S_{u0}$ denote switching states of the upper bridge arms respectively corresponding to $S_{ua}$, $S_{ub}$, and $S_{uc}$ which are converted from the $abc$ coordinate system to the $a, \beta 0$ coordinate system. $S_{d\alpha}$, $S_{d\beta}$, and $S_{d0}$ denote switching states of the lower bridge arms respectively corresponding to $S_{da}$, $S_{db}$, and $S_{dc}$ which are converted from the $abc$ coordinate system to the $a, \beta 0$ coordinate system. $i_{s\alpha}$, $i_{s\beta}$ and $i_{s0}$ denote the currents in the branches in which the filter inductors are connected, respectively corresponding to $i_{sa}$, $i_{sb}$ and $i_{sc}$ which are converted from the $abc$ coordinate system to the $a, \beta 0$ coordinate system. $e_\alpha$, $e_\beta$, and $e_0$ denote voltages of the power grid respectively corresponding to $e_a$, $e_b$, and $e_c$ which are converted from the $abc$ coordinate system to the $a, \beta 0$ coordinate system.

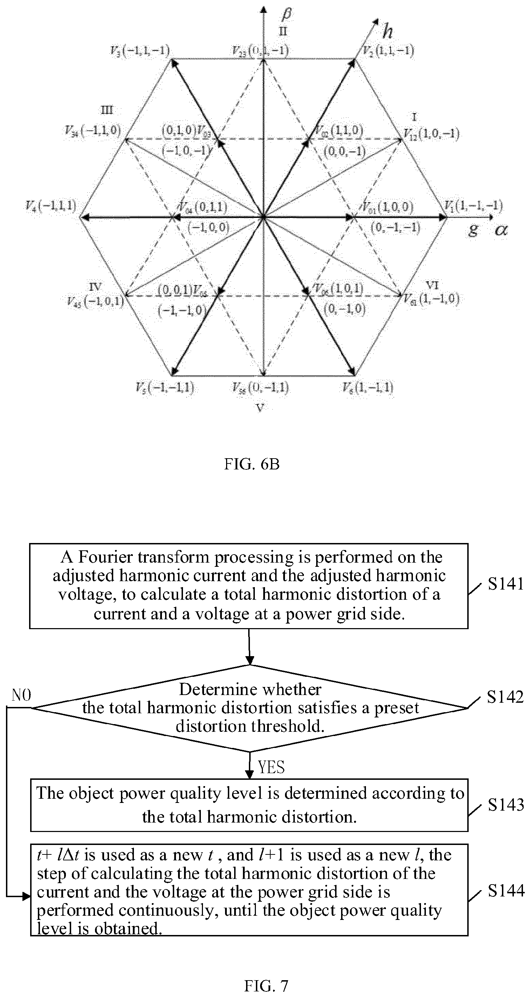

Three-level 3D-SVPWM has a total of 27 vectors, as shown in FIG. 6A, for the inverter module on the left side of the active power filter, according to a number of a power tube in each phase to be turned on or off, the power tube 1 and the power tube 2 being on is defined as S=1. The power tube 2 and the power tube 3 being on is defined as S=0. The power tube 3 and the power tube 4 being on is defined as S=-1. There may be $3 \times 3 \times 3$ namely 27 vectors for whole different states of the three phases, which include six large vectors, six medium vectors, and twelve small vectors and three zero vectors, and the specific vectors are shown in Table 1. The values of the 27 space vectors in the $a, \beta 0$ coordinate system unitized by a DC voltage $V_{dc}$ are shown in Appendix Table 1, and the schematic diagrams of the 27 space vectors in the $\alpha\beta$ coordinate system and in the $gh$ coordinate system are shown in FIG. 6B. The modulation of actuation duration needs to be transformed by the $gh$ coordinate method before it is calculated. The vector space (in the $gh$ coordinate system) is divided into six sector regions (60 degrees for each) starting from 0 degree, and each region is further divided into 4 sub-sector regions. The reference voltage $U_{ref}$ is presented by ($u_{ref\_g}$, $u_{ref\_h}$) in the $gh$ coordinate system, and the conversion relationship between the $\alpha\beta$ coordinate system and the $abc$ coordinate system is:

$$
\begin{bmatrix}
u_{ref\_g} \\[2mm]
u_{ref\_h}
\end{bmatrix}
=
\frac{2}{3}
\begin{bmatrix}
1 & -1 & 0 \\[2mm]
0 & 1 & -1
\end{bmatrix}
\begin{bmatrix}
u_a \\[2mm]
u_b \\[2mm]
u_c
\end{bmatrix}
\qquad (3)
$$

In Equation (3), $u_{ref\_g}$ denotes the g-axis component of $U_{ref}$ in the $gh$ coordinate system, $u_{ref\_h}$ denotes the h-axis component of $U_{ref}$ in the $gh$ coordinate system. The amplitude of the DC voltage $V_{dc}$ (which may include a sum of $u_{dc1}$ and $u_{dc2}$) is determined according to needs, and $U_{ref}$ is determined according to the three phases and the unitized value of the DC voltage $V_{dc}$.

Table 1

|  | $S_A$ | $S_B$ | $S_C$ | $V_\alpha$ | $V_\beta$ | $V_0$ |
|---|---|---|---|---|---|---|
| $V_{01p}$ | 1 | 0 | 0 | 1/3 | 0 | 1/6 |

(continued)

| | $S_A$ | $S_B$ | $S_C$ | $V_\alpha$ | $V_\beta$ | $V_0$ |
|---|---|---|---|---|---|---|
| $V_{01n}$ | 0 | -1 | -1 | 1/3 | 0 | -1/3 |
| $V_1$ | 1 | -1 | -1 | 2/3 | 0 | -1/6 |
| $V_{12}$ | 1 | 0 | -1 | 1/2 | $\sqrt{3}/6$ | 0 |
| $V_{02p}$ | 1 | 1 | 0 | 1/6 | $\sqrt{3}/6$ | 1/3 |
| | 0 | 0 | -1 | 1/6 | $\sqrt{3}/6$ | -1/6 |
| $V_2$ | 1 | 1 | -1 | 1/3 | $\sqrt{3}/3$ | 1/6 |
| $V_{23}$ | 0 | 1 | -1 | 0 | $\sqrt{3}/3$ | 0 |
| $V_{03p}$ | 0 | 1 | 0 | -1/6 | $\sqrt{3}/6$ | 1/6 |
| $V_{03n}$ | -1 | 0 | -1 | -1/6 | $\sqrt{3}/6$ | -1/3 |
| $V_3$ | -1 | 1 | -1 | -1/3 | $\sqrt{3}/3$ | -1/6 |
| $V_{34}\ V_{04p}$ | -1 | 1 | 0 | -1/2 | $\sqrt{3}/6$ | 0 |
| | 0 | 1 | 1 | -1/3 | 0 | 1/3 |
| $V_{04n}$ | -1 | 0 | 0 | -1/3 | 0 | -1/6 |
| $V_4$ | -1 | 1 | 1 | -2/3 | 0 | 1/6 |
| $V_{45}$ | -1 | 0 | 1 | -1/2 | $-\sqrt{3}/6$ | 0 |
| $V_{05p}$ | 0 | 0 | 1 | -1/6 | $-\sqrt{3}/6$ | 1/6 |
| $V_{05n}$ | -1 | -1 | 0 | -1/6 | $-\sqrt{3}/6$ | -1/3 |
| $V_5$ | -1 | -1 | 1 | -1/3 | $-\sqrt{3}/3$ | -1/6 |
| $V_{56}$ | 0 | -1 | 1 | 0 | $-\sqrt{3}/3$ | 0 |
| $V_{06p}$ | 1 | 0 | 1 | 1/6 | $-\sqrt{3}/6$ | 1/3 |
| $V_{06n}$ | 0 | -1 | 0 | 1/6 | $-\sqrt{3}/6$ | -1/6 |
| $V_6$ | 1 | -1 | 1 | 1/3 | $-\sqrt{3}/3$ | 1/6 |
| $V_{61}$ | 1 | -1 | 0 | 1/2 | $-\sqrt{3}/6$ | 0 |
| $V_0$ | 0 | 0 | 0 | 0 | 0 | 0 |
| $V_{0p}$ | 1 | 1 | 1 | 0 | 0 | 1/2 |

(continued)

|  | $S_A$ | $S_B$ | $S_C$ | $V_\alpha$ | $V_\beta$ | $V_0$ |
|---|---|---|---|---|---|---|
| $V_{0n}$ | -1 | -1 | -1 | 0 | 0 | -1/2 |

Then, each of the six sector regions is divided into four sub-sector regions according to the values of ($u_{ref\_g}$, $u_{ref\_h}$), and the division method is as follows:

$$\text{Region} = \begin{cases} A, & u_{ref\_g} + u_{ref\_h} \leq 1 \quad; \\ B, & u_{ref\_g} \geq 1 \quad; \\ C, & u_{ref\_g} + u_{ref\_h} > 1, u_{ref\_g} < 1, u_{ref\_h} < 1 \quad; \\ D, & u_{ref\_h} \geq 1; \end{cases} \tag{4}$$

During calculation of the actuation duration of each switch, the sub-region A and the sub-region C are divided into A1, A2 and C1, C2 respectively according to the reference vector phase ($u_{ref\_g}$, $u_{ref\_h}$). Fitting is performed for the actuation duration of the switch by using the closest vector, and the fitted actuation durations are shown in Appendix Table 2 (taking the sector region I as an example).

Table 2

| Sub-region | Vector | Actuation duration |
|---|---|---|
|  | $V_{01}$ | $T_s u_{ref\_g}$ |
| A | $V_{02}$ | $T_s u_{ref\_h}$ |
|  | $V_0$ | $T_s(1 - u_{ref\_g} - u_{ref\_h})$ |
| Sub-region | Vector | Actuation Duration |
|  | $V_1$ | $T_s(u_{ref\_g} - 1)$ |
| B | $V_{12}$ | $T_s u_{ref\_h}$ |
|  | $V_{01}$ | $T_s(2 - u_{ref\_g} - u_{ref\_h})$ |
| Sub-region | Vector | Actuation Duration |
|  | $V_{01}$ | $T_s(1 - u_{ref\_h})$ |
| C | $V_{02}$ | $T_s(1 - u_{ref\_g})$ |
|  | $V_{12}$ | $T_s(u_{ref\_g} + u_{ref\_h} - 1)$ |
| Sub-region | Vector | Actuation Duration |
|  | $V_{12}$ | $T_s u_{ref\_g}$ |
| D | $V_2$ | $T_s(u_{ref\_h} - 1)$ |
|  | $V_{02}$ | $T_s(2 - u_{ref\_g} - u_{ref\_h})$ |

The actuation duration of the voltage vector of 3D-SVPWM is:

$$\begin{cases} T_s V_{\alpha\beta0r} = T_i V_{\alpha\beta0i} + T_j V_{\alpha\beta0j} + T_z V_{\alpha\beta0zn} + T_z V_{\alpha\beta0zp} \\ T_s = T_i + T_j + T_{zn} + T_{zp} \end{cases} \tag{4}$$

In Equation (4), for the same sector region, $V_{\alpha\beta0r}$ denotes the reference voltage vector in the $a,\beta0$ coordinate system. $V_{\alpha\beta0zn}$ and $V_{\alpha\beta0zp}$ denote the vectors corresponding to positive and negative small vectors of a zero vector in the $a,\beta0$ coordinate system, respectively. $V_{\alpha\beta0i}$ and $V_{\alpha\beta0j}$ denote the vectors corresponding to remaining vectors in the $\alpha\beta0$ coordinate system. $T_{zp}$ and $T_{zn}$ denote the actuation durations of the positive and negative small vectors of the zero vector, respectively. $T_i$ and $T_j$ denote the actuation durations of the remaining vectors respectively.

In order to facilitate the calculation, the zero vector is not considered first, and the actuation durations of three vectors in the $\alpha\beta$ coordinate system, which are calculated by the 2D-SVPWM method, are:

$$\begin{cases} T_s V_{\alpha\beta r} = T_i V_{\alpha\beta i} + T_j V_{\alpha\beta j} + T_z V_{\alpha\beta z} \\ \quad\quad T_s = T_i + T_j + T_z \end{cases} \tag{5}$$

In Equation (5), $V_{\alpha\beta r}$ denotes the reference voltage vector in the $\alpha\beta$ coordinate system, $V_{\alpha\beta i}$, $V_{\alpha\beta j}$, and $V_{\alpha\beta z}$ denote corresponding vectors in the same region in the $\alpha\beta$ coordinate system, respectively, and $T_z$ denotes the actuation duration corresponding to the zero vector.

Then, by taking zero-sequence components into consideration, the actuation durations of the positive and negative small vectors of the zero vector are calculate to be:

$$\begin{cases} T_s V_{0\_r} = T_i V_{0i} + T_j V_{0j} + T_{zn} V_{0zn} + T_{zp} V_{0zp} \\ \quad\quad T_z = T_{zn} + T_{zp} \end{cases} \tag{6}$$

In Equation (6), $V_{0\_r}$ denotes the zero-sequence reference voltage. $V_{0i}$, $V_{0j}$, $V_{0zn}$, and $V_{0zp}$ denote different vectors in the same region, respectively. $T_z$ denotes the actuation duration of the zero vector.

Taking the sub-sector region B of the sector region I as an example, it may be obtained from Equation (4):

$$\begin{cases} T_s V_{0\_r} = T_{12} V_2 + T_1 V_1 + T_{01n} V_{01n} + T_{01p} V_{01p} \\ \quad\quad T_s = T_{12} + T_1 + T_{01n} + T_{01p} \end{cases} \tag{7}$$

Then the actuation durations the SVPWM based on the *gh* coordinate system are obtained:

$$\begin{cases} T_{12} = T_s u_{ref\_h} \\ T_1 = T_s \left( u_{ref\_g} - 1 \right) \\ T_{01} = T_s \left( 2 - u_{ref\_g} - u_{ref\_h} \right) \end{cases} \tag{8}$$

Then the zero-sequence component expressions are calculated:

$$\begin{cases} T_s V_{0\_r} = T_{12} \cdot 0 - T_1 \cdot \dfrac{1}{6} V_{dc} - T_{01n} \cdot \dfrac{1}{3} V_{dc} + T_{01p} \cdot \dfrac{1}{6} V_{dc} \\ \quad\quad T_{01} = T_{01n} + T_{01p} \end{cases} \tag{9}$$

That is

$$\begin{cases} T_{01p} = \dfrac{1}{3} \left( 3 - u_{ref\_g} - 2u_{ref\_h} \right) T_s + 2 \dfrac{V_{0\_r}}{V_{dc}} \cdot T_s \\ T_{01n} = \dfrac{1}{3} \left( 3 - 2u_{ref\_g} - u_{ref\_h} \right) T_s - 2 \dfrac{V_{0\_r}}{V_{dc}} \cdot T_s \end{cases} \tag{10}$$

As can be seen from the attached Table 1, the switch states corresponding to $V_1$, $V_{12}$, $V_{01p}$, and $V_{01n}$ are (1,-1,-1), (1,0,-1), (1,0,0), and (0,-1,- 1) respectively. Based on the 8-segment synthetic reference voltage method, starting from the positive vector of the zero vector, two sides are symmetrical when switching states of each phase are changed, that is, the order is (1,0,0)→(1,0,-1)→(1, -1,-1)→(0,-1,-1)→(1,-1,-1)→(1,0,-1)→(1,0,0). The actuation durations of the switches corresponding to the switch states in the order are sequentially as follows:

$$\frac{T_{01p}}{2}、\frac{T_{12}}{2}、\frac{T_1}{2}、\quad T_{01n}、\frac{T_1}{2}、\frac{T_{12}}{2}、\frac{T_{01p}}{2}$$

The switch state being 0 is defined as the switch actuation state herein, then the actuation durations of the three phases switches of the sub-sector region B of the sector region I are obtained:

$$\begin{bmatrix} T_a \\ T_b \\ T_c \end{bmatrix} = \begin{bmatrix} 0 & 0 & 0 & 1 \\ 1 & 1 & 0 & 0 \\ 1 & 0 & 0 & 0 \end{bmatrix} \begin{bmatrix} T_{01p} \\ T_{12} \\ T_1 \\ T_{01n} \end{bmatrix} \qquad (11)$$

Substituting the actuation duration of the sub-sector region B in the Equation (4), and the Equation (10) into the Equation (11), the actuation durations of the switches of the inverter module in the three-phased active power filter of the voltage compensation module are obtained:

$$\begin{cases} T_a = \frac{1}{3}\left(3 - 2u_{ref\_g} - u_{ref\_h}\right)T_s - 2\frac{V_{0\_r}}{V_{dc}} \cdot T_s \\ T_b = \frac{1}{3}\left(3 - u_{ref\_g} + u_{ref\_h}\right)T_s + 2\frac{V_{0\_r}}{V_{dc}} \cdot T_s \qquad (12) \\ T_c = \frac{1}{3}\left(3 - u_{ref\_g} - 2u_{ref\_h}\right)T_s + 2\frac{V_{0\_r}}{V_{dc}} \cdot T_s \end{cases}$$

The vector actuation duration of each sub-sector region is obtained by the equations (1) to (12), and the actuation durations of all switches are divided into two groups by $i_{sb} < 0$ and $i_{sb} > 0$, so the sub-sector regions are not necessarily to be distinguished, thus eliminating an error of the sub-sector region division, that is, it is determined that the vector space formed by the *gh* coordinate system is divided into the sector region I, the sector region II, the sector region III, the sector region IV, the sector region V, and the sector region VI.

At Step S132, a sector region switch actuation duration of each sector region is obtained, and one sector region switch actuation duration is selected from a plurality of obtained sector regions switch actuation durations to act as an object switch actuation duration. The sector region switch actuation duration is configured to characterize a switch actuation duration of a power device in the inverter in a corresponding sector region.

Specifically, the computer device may first determine the object sector region based on the plurality of the sector regions divided by the vector space formed by the *gh* coordinate system, and the object sector region may be the sector region corresponding to a position of the reference vector phase ($u_{ref\_g}$, $u_{ref\_h}$), and then the object switch actuation duration corresponding to the object sector region is determined.

During the actual processing, the inverter may include a circuit in FIG. 5, which is composed of 12 groups of IGBTs and anti-parallel diodes, and the power device in the inverter may include the power switch device.

At Step S133, the harmonic voltage to be compensated is inputted into a preset harmonic voltage adjusting circuit, and the output voltage of the harmonic voltage adjusting model circuit is used as an adjusted harmonic voltage. The harmonic voltage adjusting circuit includes a plurality of groups of power switch devices and load elements, which are connected in a preset connection manner. The plurality of groups of power switch devices are turned on or off according to the object switch actuation duration.

Specifically, the computer device may input the harmonic voltage to be compensated into the preset harmonic voltage adjusting circuit (such as a parallel active power filter) to adjust the harmonic voltage. That is, an object PWM signal corresponding to the harmonic voltage to be compensated is obtained first, then the object PWM signal is input into the parallel active power filter, and the inverter switch is controlled to be turned on or off by the object switch actuation duration, and finally the voltage, which is outputted by the corresponding power switch device in the harmonic voltage adjusting circuit and the load, is the adjusted harmonic voltage. Optionally, each group of power switch device may be a combination of an IGBT and an anti-parallel diode.

During the actual processing, the parallel active power filter may also be shown in FIG. 5. The parallel active power filter may include a three-level neutral-point-clamped inverter. The phase *a* includes four groups of power devices.

The phase *b* includes four groups of power devices. The phase c includes four groups of power devices, two clamping diodes, and loads, and the four groups of power devices are $S_{*1}$, $S_{*2}$, $S_{*3}$, and $S_{*4}$. The compensation process for the harmonic voltage to be compensated is realized through obtaining the object switch actuation duration and the preset harmonic voltage adjusting circuit, thereby effectively reducing the harmonic voltage component in the computer device, and effectively increasing the accuracy and reliability of the effective voltage in the computer device.

At Step S14, an object power quality level for the power grid is determined according to the adjusted harmonic current and the adjusted harmonic voltage.

Specifically, the computer device determining the object power quality level for the power grid is shown in FIG. 7, and includes the following steps.

At Step S141, a Fourier transform processing is performed on the adjusted harmonic current and the adjusted harmonic voltage, to calculate a total harmonic distortion of a current and a voltage at a power grid side.

Specifically, the total harmonic distortion may include the harmonic distortion of the current and the harmonic distortion of the voltage, which are calculated by the following equations:

$$THD_I = \frac{\sqrt{\sum_{k=2}^{n} I_k^2}}{I_1} \times 100\% , \quad THD_U = \frac{\sqrt{\sum_{k=2}^{n} U_k^2}}{U_1} \times 100\% \tag{13}$$

Where, $THD_I$ denotes the harmonic distortion of the current, $I_k$ denotes an effective value of a *k*-order harmonic current, $I_1$ denotes an effective value of a fundamental current, $THD_U$ denotes the harmonic distortion of the voltage, $U_k$ denotes an effective value of a k-order harmonic voltage, and $U_1$ denotes an effective value of a fundamental voltage.

At Step S142, it is determined whether the total harmonic distortion satisfies a preset distortion threshold.

Specifically, when the computer device obtains the total harmonic distortion, it may be further determined whether the total harmonic distortion is less than or equal to the preset distortion threshold. The preset distortion threshold may be configured to characterize that the residual harmonic current and the residual harmonic voltage, which are obtained after the harmonic current to be compensated and the harmonic voltage to be compensated are respectively compensated, do not affect the effectiveness of the effective current and effective voltage in the power grid.

During the actual processing, when the computer device determines that the total harmonic distortion satisfies the preset distortion threshold, go to step S143; on the contrary, when the computer device determines that the total harmonic distortion does not meet the preset distortion threshold, go to step S144.

At Step S143, if yes, the object power quality level is determined according to the total harmonic distortion.

Specifically, the computer device determines that the total harmonic distortion satisfies the preset distortion threshold, which may mean that the total harmonic distortion is less than or equal to the preset distortion threshold, and which may characterize that the remaining harmonic current and the remaining harmonic voltage, which are obtained after the harmonic current to be compensated and the harmonic voltage to be compensated are respectively compensated, do not affect the effectiveness of the effective current and effective voltage in the power grid. At this time, the object power quality level corresponding to the total harmonic distortion calculated at this time may be further determined. For example, when the preset distortion threshold is 2%, and if the total harmonic distortion calculated at this time is 1%, then the object power quality level may be good, and if the total harmonic distortion calculated at this time is 0.5%, then the object power quality level may be excellent.

At Step S144, if not, $t+l\Delta t$ is used as a new *t*, and *l*+1 is used as a new *l*, the step of calculating the total harmonic distortion of the current and the voltage at the power grid side is performed continuously, until the object power quality level is obtained. Where, *l* is an integer greater than or equal to 0, *l* = 0,1,2,3 and the like, and *l* denotes the number of recalculations for the total harmonic distortion, and an initial value of *l* is 0. $\Delta t$ denotes a preset time interval.

Specifically, the computer determines that the total harmonic distortion does not meet the preset distortion threshold, which may mean that the total harmonic distortion is greater than the preset distortion threshold, and which may characterize that the residual harmonic current and the residual harmonic voltage, which are obtained after the harmonic current to be compensated and the harmonic voltage to be compensated are respectively compensated, will affect the effectiveness of the effective current and effective voltage in the power grid. At this time, $t+l\Delta t$ is used as the new *t*, and *l*+1 is used as the new *l*, the step of calculating the total harmonic distortion of the current and the voltage at the power grid side is performed continuously, until the object power quality level for the power grid is determined, so as to ensure the flexibility and reliability of the adjusted harmonic current and adjusted harmonic voltage after the harmonic current to be compensated and the harmonic voltage to be compensated are respectively compensated, thereby ensuring the effectiveness and the stability of the power quality of the power grid.

In the power quality level determining method for the power grid above, first, the harmonic current to be compensated and the harmonic voltage to be compensated in the power grid are obtained, then the current adjustment processing is performed on the harmonic current to be compensated according to the compared result of the harmonic current to be compensated and the actual compensating current, and the voltage adjustment processing is performed on the harmonic voltage to be compensated according to the harmonic voltage to be compensated and the pre-obtained object switch actuation duration, to obtain the adjusted harmonic current and the adjusted harmonic voltage. In this way, the adjustment of the harmonic current is realized through the compared result of the harmonic current to be compensated and the actual compensating current, and the adjustment of the harmonic voltage is realized through the harmonic voltage to be compensated and the object switch actuation duration, which avoids the problems of low compensation accuracy of the harmonic voltage and the harmonic current and large amount of computation in the traditional technology, which are caused by compensating, by a hysteresis comparator, the harmonic current detected by the *dq0* transformation method, and which are caused by compensating, by the parallel active power filter, the harmonic voltage detected by the *dq0* transformation method, thereby improving the compensation accuracy and compensation speed of the harmonic current and the harmonic voltage. Further, the object power quality level for the power grid is determined according to the adjusted harmonic current and the adjusted harmonic voltage, so as to achieve the objective of obtaining the object power quality level corresponding to the adjusted harmonic current and the adjusted harmonic voltage, and may also achieve the objective that when the object power quality level is higher, the compensation accuracy of the adjusted harmonic current and the adjusted harmonic voltage which are obtained are higher, thereby improving the accuracy and reliability of obtaining the adjusted harmonic current and the adjusted harmonic voltage.

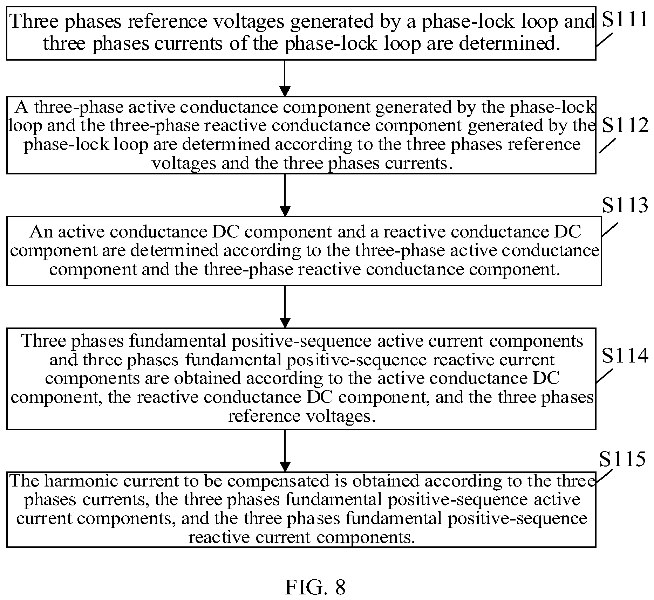

In an embodiment, as shown in FIG. 8, in an obtaining process of the harmonic current to be compensated described in the step S11, the harmonic current to be compensated is obtained after being detected by the FBD detection method, and the obtaining process may specifically include the following sub-steps.

At Step S111, three phases reference voltages generated by a phase-lock loop and three phases currents of the phase-lock loop are determined.

Specifically, the computer device obtains the three phases reference voltages and the three phases currents by using the following equations:

$$
\begin{bmatrix} e_a \\ e_b \\ e_c \end{bmatrix} = \begin{pmatrix} \sin \omega t \\ \sin(\omega t - 120°) \\ \sin(\omega t + 120°) \end{pmatrix}
\tag{14}
$$

$$
\begin{cases}
i_a = \sum_{n=1}^{\infty} \left[ I_{1n} \sin(n\omega t + \varphi_{1n}) + I_{2n} \sin(n\omega t + \varphi_{2n}) + I_{0n} \sin(n\omega t + \varphi_{0n}) \right] \\
i_b = \sum_{n=1}^{\infty} \left[ I_{1n} \sin(n\omega t + \varphi_{1n} - 120°) + I_{2n} \sin(n\omega t + \varphi_{2n} - 120°) + I_{0n} \sin(n\omega t + \varphi_{0n} - 120°) \right] \\
i_c = \sum_{n=1}^{\infty} \left[ I_{1n} \sin(n\omega t + \varphi_{1n} + 120°) + I_{2n} \sin(n\omega t + \varphi_{2n} + 120°) + I_{0n} \sin(n\omega t + \varphi_{0n} + 120°) \right]
\end{cases}
\tag{15}
$$

Where, $e_a$, $e_b$, and $e_c$ denote the three phases reference voltages of the phase-lock loop at the moment *t*, respectively. $i_a$, $i_b$, and $i_c$ denote the three phases currents of the phase-lock loop at the moment *t*, respectively. $\varphi_{1a}$ denotes an angle between a voltage of an *a*-phase and an *a*-phase fundamental positive-sequence current. $\varphi_{1n}$, $\varphi_{2n}$, and $\varphi_{0n}$ denote an *n*-order positive-sequence harmonic current initial phase, an n-order negative-sequence harmonic current initial phase, an n-order zero-sequence harmonic current initial phase of the phase-lock loop, respectively. $I_{1n}$, $I_{2n}$, and $I_{0n}$ denote an n-order positive-sequence harmonic current amplitude, an *n*-order negative-sequence harmonic current amplitude, an n-order zero-sequence harmonic current amplitude of the phase-lock loop, respectively. $\omega$ denotes an angular frequency of the power grid, and $\omega t$ denotes a changing phase angle of the power grid at the moment *t*.

At Step S112, a three-phase active conductance component generated by the phase-lock loop and the three-phase reactive conductance component generated by the phase-lock loop are determined according to the three phases reference voltages and the three phases currents.

Specifically, the three-phase active conductance components and the three-phase reactive conductance component may be obtained by the following equations:

$$\begin{cases} G_P(t) = \dfrac{\langle u,i \rangle}{\langle u,u \rangle} = \dfrac{P_\Sigma}{\|u\|^2} = \dfrac{e_a i_a + e_b i_b + e_c i_c}{e_a^2 + e_b^2 + e_c^2} \\[3mm] G_Q(t) = \dfrac{\langle u^*,i \rangle}{\langle u^*,u \rangle} = \dfrac{P_\Sigma}{\|u^*\|^2} \dfrac{e_a^* i_a + e_b^* i_b + e_c^* i_c}{(e_a^*)^2 + (e_b^*)^2 + (e_c^*)^2} \end{cases} \tag{16}$$

Where, $G_P(t)$ denotes the three-phase active conductance component generated by the phase-lock loop at the moment $t$. $G_Q(t)$ denotes the three-phase reactive conductance component generated by the phase-lock loop at the moment t. $P_\Sigma$ denotes the sum of the three phases reference powers of the phase-lock loop. $u$ denotes the ideal three-phase voltage obtained by the phase-lock loop. $i$ denotes the three-phase current obtained by the phase-lock loop. $u^*$ denotes the reference voltage of the system voltage with shifted phase obtained by locking phase. $e_a^*$, $e_b^*$, and $e_c^*$ denote specific three phases reference voltages with shifted phases of the phase-lock loop, respectively. $\langle u,i \rangle$ denotes an inner product of $u$ and $i$. $(u,i)$ denotes an inner product of $u$ and $i$. $\langle u,u \rangle$ denotes an inner product of $u$ and $u$. $\langle u^*,i \rangle$ denotes an inner product of $u^*$ and $i$. $\langle u^*,i \rangle$ denotes an inner product of $u^*$ and $u$. $\langle u,i \rangle$ denotes an inner product of $u$ and $i$.

At Step S113, an active conductance DC component and a reactive conductance DC component are determined according to the three-phase active conductance component and the three-phase reactive conductance component.

Specifically, the active conductance DC component and the reactive conductance DC component may be obtained by performing low-pass filtering on the three-phase active conductance component and on the three-phase reactive conductance component, and may be obtained by using the following equations:

$$\begin{cases} G_P = G_P(t) I_{1amp} \cos \varphi_{1a} \\[2mm] G_Q = G_Q(t) I_{1amp} \sin \varphi_{1a} \end{cases} \tag{17}$$

Where, $G_P$ denotes the active conductance DC component at the moment $t$. $G_Q$ denotes the reactive conductance DC component at the moment $t$. $I_{1amp}$ denotes the positive-sequence current amplitude of the phase-lock loop. $\varphi_{1a}$ denotes the angle between the $a$-phase voltage and the $a$-phase fundamental positive-sequence current.

At Step S114, three phases fundamental positive-sequence active current components and three phases fundamental positive-sequence reactive current components are obtained according to the active conductance DC component, the reactive conductance DC component, and the three phases reference voltages.

Specifically, the computer device may obtain the three phases fundamental positive-sequence active current components and the three phases fundamental positive-sequence reactive current components according to the following equations:

$$\begin{cases} i_{a1P} = G_P e_a = I_{1amp} \cos \varphi_{1a} \sin \omega t \\[2mm] i_{b1P} = G_P e_b = I_{1amp} \cos \varphi_{1a} \sin(\omega t - 120°) \\[2mm] i_{c1P} = G_P e_c = I_{1amp} \cos \varphi_{1a} \sin(\omega t + 120°) \end{cases} \tag{18}$$

$$\begin{cases} i_{a1Q} = G_Q e_a = I_{1amp} \sin \varphi_{1a} \cos \omega t \\[2mm] i_{b1Q} = G_Q e_b = I_{1amp} \sin \varphi_{1a} \cos(\omega t - 120°) \\[2mm] i_{c1Q} = G_Q e_c = I_{1amp} \sin \varphi_{1a} \cos(\omega t + 120°) \end{cases} \tag{19}$$

Where, $i_{a1P}$, $i_{b1P}$, and $i_{c1P}$ denote the three phases fundamental positive-sequence active current components at the moment $t$, respectively. $i_{a1Q}$, $i_{b1Q}$, and $i_{c1Q}$ denote the three phases fundamental positive-sequence reactive current components at the moment $t$, respectively.

At Step S115, the harmonic current to be compensated is obtained according to the three phases currents, the three phases fundamental positive-sequence active current components, and the three phases fundamental positive-sequence reactive current components.

Specifically, the harmonic current to be compensated may include three phases harmonic currents to be compensated at the moment *t*, and the computer device may obtain the three phases harmonic currents to be compensated at the moment *t* by the following equations:

$$\begin{cases} i_{a1} = i_{a1P} + i_{a1Q} \\ i_{b1} = i_{b1P} + i_{b1Q} \\ i_{c1} = i_{c1P} + i_{c1Q} \end{cases} \tag{20}$$

$$\begin{cases} i_{aN}^* = i_a - i_{a1} \\ i_{bN}^* = i_b - i_{b1} \\ i_{cN}^* = i_c - i_{c1} \end{cases} \tag{21}$$

Where, $i_{a1}$, $t_{b1}$, and $i_{c1}$ denote the three phases fundamental positive-sequence currents of the phase-lock loop at the moment *t*, respectively. $i_a$, $i_b$, and $i_c$ denote the three phases currents of the phase-lock loop at the moment *t*, respectively. $i_{aN}^*$, $i_{bN}^*$, and $i_{cN}^*$ denote the three phases harmonic currents to be compensated at the moment t, respectively.

In this embodiment, the computer device determines the harmonic current to be compensated in the power grid through the process of detecting the harmonic current in the power grid through the FBD detection method, which may combine the advantages of the easy implementation and high real-time performance of the FBD detection method to realize the objective of obtaining the harmonic current to be compensated quickly, thereby improving the reliability and accuracy of the current to be compensated.

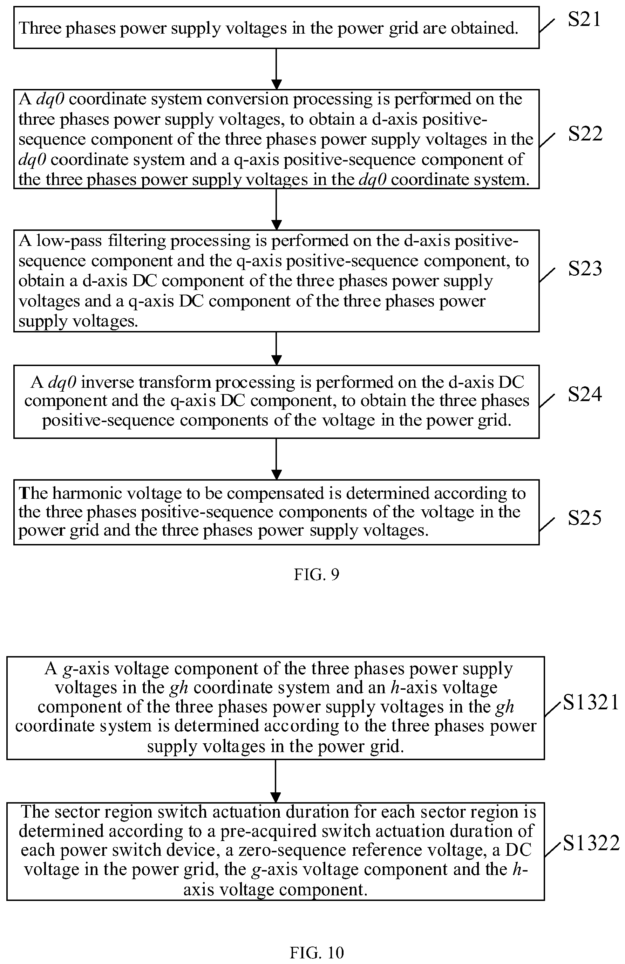

In an embodiment, as shown in FIG. 9, in the obtaining process of the harmonic current to be compensated described in the step S11, the harmonic current to be compensated is obtained after being detected by the *dq0* detection method, and the obtaining process may include the following specific sub-steps.

At Step S21, three phases power supply voltages in the power grid are obtained.

Specifically, the computer device may obtain the three phases power supply voltages in the power grid at the moment *t* by using the following equations:

$$\begin{cases} u_a = u_a^+ + u_a^- + u_0 + \sum_{n=2}^{\infty} (u_{an}^+ + u_{an}^-) \\ u_b = u_b^+ + u_b^- + u_0 + \sum_{n=2}^{\infty} (u_{bn}^+ + u_{bn}^-) \\ u_c = u_c^+ + u_c^- + u_0 + \sum_{n=2}^{\infty} (u_{cn}^+ + u_{cn}^-) \end{cases} \tag{22}$$

$$\begin{cases} u_a^+ = U^+ \cos\left(\omega t + \varphi^+\right) \\ u_b^+ = U^+ \cos\left(\omega t - 120° + \varphi^+\right) \\ u_c^+ = U^+ \cos\left(\omega t + 120° + \varphi^+\right) \end{cases} \tag{23}$$

$$\begin{cases} u_a^- = U^- \cos\left(\omega t + \varphi^-\right) \\ u_b^- = U^- \cos\left(\omega t + 120° + \varphi^-\right) \\ u_c^- = U^- \cos\left(\omega t - 120° + \varphi^-\right) \end{cases} \tag{24}$$

$$\begin{cases} u_{an}^+ = U_n^+ \cos\left(n\omega t + \varphi_n^+\right) \\ u_{bn}^+ = U_n^+ \cos\left(n\omega t - 120° + \varphi_n^+\right) \\ u_{cn}^+ = U_n^+ \cos\left(n\omega t + 120° + \varphi_n^+\right) \end{cases} \tag{25}$$

$$\begin{cases} u_{an}^- = U_n^- \cos\left(n\omega t + \varphi_n^-\right) \\ u_{bn}^- = U_n^- \cos\left(n\omega t + 120° + \varphi_n^-\right) \\ u_{cn}^- = U_n^- \cos\left(n\omega t - 120° + \varphi_n^-\right) \end{cases} \tag{26}$$

Where, $u_a$, $u_b$, $u_c$ denote the three phases power supply voltages in the power grid at the moment $t$, respectively. $u_0$ denotes the fundamental voltage zero-sequence component in the power grid. $u_a^+$, $u_b^+$, and $u_c^+$ denote the three phases voltage positive-sequence components in the power grid at the moment $t$, respectively. $u_a^-$, $u_b^-$, and $u_c^-$ denote the three phases voltage negative-sequence components in the power grid at the moment $t$, respectively. $u_{an}^+$, $u_{bn}^+$, and $u_{cn}^+$ denote the three phases n-order positive-sequence harmonic components of the voltage in the power grid at the moment $t$, respectively. $u_{an}^-$, $u_{bn}^-$, and $u_{cn}^-$ denote the three phases n-order negative-sequence harmonic components of the voltage in the power grid at the moment $t$, respectively. $U^+$ and $U^-$ denote the fundamental voltage fundamental positive-sequence amplitude and the fundamental voltage fundamental negative-sequence amplitude in the power grid, respectively. $\varphi^+$ and $\varphi^-$ denote the fundamental voltage fundamental positive-sequence phase in the power grid and the fundamental voltage fundamental negative-sequence phase in the power grid, respectively. $U_n^+$ and $U_n^-$ denote the n-order positive-sequence harmonic amplitude of the harmonic voltage in the power grid and the n-order negative-sequence harmonic amplitude of the harmonic voltage in the power grid, respectively. $\varphi_n^+$ and $\varphi_n^-$ denote the n-order positive-sequence harmonic phase of the harmonic voltage in the power grid and the n-order negative-sequence harmonic phase of the harmonic voltage in the power grid, respectively. $\omega$ denotes the angular frequency of the power grid, and $\omega t$ denotes the changing phase angle of the power grid at the moment $t$.

Step S22, a *dq0* coordinate system conversion processing is performed on the three phases power supply voltages, to obtain a d-axis positive-sequence component of the three phases power supply voltages in the *dq0* coordinate system and a q-axis positive-sequence component of the three phases power supply voltages in the *dq0* coordinate system.

Specifically, the computer device may perform the *dq0* coordinate system conversion processing on the three phases power supply voltages, to obtain the d-axis positive-sequence component of the three phases power supply voltages in the *dq0* coordinate system at the moment t, and the q-axis positive-sequence component of the three phases power supply voltages in the *dq0* coordinate system at the moment *t* by the following equations:

$$\begin{bmatrix} u_d \\ u_q \end{bmatrix} = DC \begin{bmatrix} u_a \\ u_b \\ u_c \end{bmatrix} = DC \sum_{n=1}^{\infty} \begin{bmatrix} u_{an}^+ \\ u_{bn}^+ \\ u_{cn}^+ \end{bmatrix} + DC \sum_{n=1}^{\infty} \begin{bmatrix} u_{an}^- \\ u_{bn}^- \\ u_{cn}^- \end{bmatrix} = \begin{bmatrix} u_d^+ \\ u_q^+ \end{bmatrix} + \begin{bmatrix} u_d^- \\ u_q^- \end{bmatrix} \tag{27}$$

$$C = \sqrt{\frac{2}{3}} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix}, \quad D = \begin{bmatrix} \cos\omega t & \sin\omega t \\ -\sin\omega t & \cos\omega t \end{bmatrix} \tag{28}$$

$$\begin{bmatrix} u_d^+ \\ u_q^+ \end{bmatrix} = \sqrt{\frac{2}{3}} \sum_{n=1}^{\infty} U_n^+ \begin{bmatrix} \cos\left[(n-1)\omega t + \varphi_n^+\right] \\ \sin\left[(n-1)\omega t + \varphi_n^+\right] \end{bmatrix} \qquad (29)$$

Where, $u_d$ denotes the d-axis component of the three phases power supply voltages in the *dq0* coordinate system. $u_q$ denotes the q-axis component of the three phases power supply voltages in the *dq0* coordinate system. $u_{an}^+$, $u_{bn}^+$, and $u_{cn}^+$ denote the three phases n-order positive-sequence harmonic components of the voltage in the power grid at the moment *t*, respectively. $u_{an}^-$, $u_{bn}^-$, and $u_{cn}^-$ denote the three phases n-order negative-sequence harmonic components of the voltage in the power grid at the moment *t,* respectively. $u_d^+$ denotes the d-axis positive-sequence component of the three phases power supply voltages in the *dq0* coordinate system at the moment *t*. $u_q^+$ denotes the q-axis positive-sequence component of the three phases power supply voltages in the *dq0* coordinate system at the moment *t*.

During the actual processing, the computer device may further obtain a d-axis negative-sequence component of the three phases power supply voltages in the *dq0* coordinate system at the moment *t*, and the q-axis negative-sequence component of the three phases power supply voltages in the *dq0* coordinate system at the moment *t* by the following equations:

$$\begin{bmatrix} u_d^- \\ u_q^- \end{bmatrix} = \sqrt{\frac{2}{3}} \sum_{n=1}^{\infty} U_n^- \begin{bmatrix} \cos\left[(n-1)\omega t + \varphi_n^-\right] \\ -\sin\left[(n-1)\omega t + \varphi_n^-\right] \end{bmatrix} \qquad (30)$$

Where, $U_n^-$ denotes the n-order negative-sequence harmonic amplitude of the harmonic voltage in the power grid. $\varphi_n^-$ denotes the n-order negative-sequence harmonic phase of the harmonic voltage in the power grid. $u_d^-$ denotes the d-axis negative-sequence component of the three phases power supply voltages in the *dq0* coordinate system at the moment *t,* and $u_q^-$ denotes the q-axis negative-sequence component of the three phases power supply voltages in the *dq0* coordinate system at the moment *t.*

At Step S23, a low-pass filtering processing is performed on the d-axis positive-sequence component and the q-axis positive-sequence component, to obtain a d-axis DC component of the three phases power supply voltages and a q-axis DC component of the three phases power supply voltages.

Specifically, the computer device may obtain the d-axis DC component of the three phases power supply voltages at the moment *t* and the q-axis DC component of the three phases power supply voltages at the moment *t* by the following equations:

$$\begin{bmatrix} \bar{u}_d \\ \bar{u}_q \end{bmatrix} = \sqrt{\frac{3}{2}} U^+ \begin{bmatrix} \cos\left(\omega t + \varphi^+\right) \\ \sin\left(\omega t + \varphi^+\right) \end{bmatrix} \qquad (31)$$

Where, $\bar{u}_d$ denotes the d-axis DC component of the three phases power supply voltages at the moment *t*. $\bar{u}_q$ denotes the q-axis DC component of the three phases power supply voltages at the moment *t*. $\varphi^+$ denotes the fundamental voltage fundamental positive-sequence phase in the power grid, and $U^+$ denotes the fundamental voltage fundamental positive-sequence amplitude in the power grid.

During the actual processing, the n-order positive-sequence component in the *abc* coordinate system is converted to the *(n-1)*-order component in the *dq0* coordinate system, and the n-order negative-sequence component is converted to be the *(n+1)*-order component in the *dq0* coordinate system. The DC component in the *dq0* coordinate system is obtained by transforming the fundamental component in the *abc* coordinate system through the Park transformation of Equation (26), and needs to be separated by a low-pass filter.

At Step S24, a *dq0* inverse transform processing is performed on the d-axis DC component and the q-axis DC component, to obtain the three phases positive-sequence components of the voltage in the power grid.

Specifically, the computer device may obtain the three phases positive-sequence components of the voltage in the power grid at the moment *t* by using the following equations:

$$
\begin{bmatrix} u_a^+ \\ u_b^+ \\ u_c^+ \end{bmatrix} = C^T D^{-1} \begin{bmatrix} \overline{u}_d \\ \overline{u}_q \end{bmatrix} = \begin{bmatrix} U^+ \cos\left(\omega t + \varphi^+\right) \\ U^+ \cos\left(\omega t - 120° + \varphi^+\right) \\ U^+ \cos\left(\omega t + 120° + \varphi^+\right) \end{bmatrix}
\tag{32}
$$

Where, $u_a^+$, $u_b^+$, and $u_c^+$ denote the three phases voltage positive-sequence components in the power grid at the moment *t*. $\overline{u}_d$ denotes the d-axis DC component of the three phases power supply voltages at the moment *t*. $\overline{u}_q$ denotes the q-axis DC component of the three phases power supply voltages at the moment *t*. $\varphi^+$ denotes the fundamental voltage fundamental positive-sequence phase in the power grid, and $U^+$ denotes the fundamental voltage fundamental positive-sequence amplitude in the power grid.

At Step S25, the harmonic voltage to be compensated is determined according to the three phases positive-sequence components of the voltage in the power grid and the three phases power supply voltages.

Specifically, the computer device may obtain the three phases harmonic voltages to be compensated at the moment *t* by using the following equations:

$$
\begin{cases} u_{ac} = u_a - u_a^+ \\ u_{bc} = u_b - u_b^+ \\ u_{cc} = u_c - u_c^+ \end{cases}
\tag{33}
$$

Where, $u_{ac}$, $u_{bc}$ and $u_{cc}$ denote the three phases harmonic voltages to be compensated at the moment *t*, respectively. $u_a^+$, $u_b^+$, and $u_c^+$ denote the three phases voltage positive-sequence components in the power grid at the moment *t*, respectively. $u_a$, $u_b$ and $u_c$ denote the three phases power supply voltages in the power grid at the moment *t*, respectively.

In this embodiment, the computer device determines the harmonic voltages to be compensated in the power grid through the process of detecting the harmonic voltages in the power grid through the *dq0* detecting method, which can realize the objective of fast acquiring the harmonic voltages to be compensated by combining the advantages of easy implementation and flexibility of the *dq0* detecting method, thereby improving the reliability and accuracy of the voltages to be compensated.

In an embodiment, as shown in FIG. 10, for the obtaining the sector region switch actuation duration of each sector region in step S132, the sector region switch actuation duration of each sector region may be obtained by a sub-sector region division method of an improved 3D-SVPWM method, which may include following specific sub-steps.

At Step S1321, a g-axis voltage component of the three phases power supply voltages in the *gh* coordinate system and an *h*-axis voltage component of the three phases power supply voltages in the *gh* coordinate system is determined according to the three phases power supply voltages in the power grid.

Specifically, the computer device may obtain the g-axis voltage component and the *h*-axis voltage component by using the following equation:

$$
\begin{bmatrix} u_{ref\_g} \\ u_{ref\_h} \end{bmatrix} = \frac{2}{3} \begin{bmatrix} 1 & -1 & 0 \\ 0 & 1 & -1 \end{bmatrix} \begin{bmatrix} u_a \\ u_b \\ u_c \end{bmatrix}
\tag{34}
$$

Where, $u_a$, $u_b$, $u_c$ denote the three phases power supply voltages in the power grid. $u_{ref\_g}$ denotes the g-axis voltage component of the three phases power supply voltages in the *gh* coordinate system, and $u_{ref\_h}$ denotes the *h*-axis voltage component of the three phases power supply voltages in the *gh* coordinate system.

At Step S1322, the sector region switch actuation duration for each sector region is determined according to a pre-acquired switch actuation duration of each group of power switch devices, a zero-sequence reference voltage, a voltage across the DC side capacitor in the inverter circuit, the g-axis voltage component and the *h*-axis voltage component.

Specifically, the sector region switch actuation duration determined by the computer device may include a switch actuation duration of a sector region I, a switch actuation duration of a sector region II, a switch actuation duration of a sector region III, a switch actuation duration of a sector region IV, a switch actuation duration of a sector region V, a switch actuation duration of a sector region, which are obtained through the following equations:

$$
\mathrm{I}
\begin{cases}
T_a = \dfrac{1}{3}\left(3 - 2u_{ref\_g} - u_{ref\_h}\right)T_s - 2\dfrac{V_{0\_r}}{V_{dc}}\cdot T_s \\[2mm]
T_b = \dfrac{1}{3}\left(3 + u_{ref\_g} - u_{ref\_h}\right)T_s - 2\dfrac{V_{0\_r}}{V_{dc}}\cdot T_s \quad (i_{sb} > 0) \\[2mm]
T_b = \dfrac{1}{3}\left(3 - u_{ref\_g} + u_{ref\_h}\right)T_s + 2\dfrac{V_{0\_r}}{V_{dc}}\cdot T_s \quad (i_{sb} < 0) \\[2mm]
T_c = \dfrac{1}{3}\left(3 - u_{ref\_g} - 2u_{ref\_h}\right)T_s + 2\dfrac{V_{0\_r}}{V_{dc}}\cdot T_s
\end{cases}
\tag{35}
$$

$$
\mathrm{II}
\begin{cases}
T_a = \dfrac{1}{3}\left(3 - u_{ref\_g} + u_{ref\_h}\right)T_s - 2\dfrac{V_{0\_r}}{V_{dc}}\cdot T_s \quad (i_{sa} > 0) \\[2mm]
T_a = \dfrac{1}{3}\left(3 + u_{ref\_g} - u_{ref\_h}\right)T_s + 2\dfrac{V_{0\_r}}{V_{dc}}\cdot T_s \quad (i_{sa} < 0) \\[2mm]
T_b = \dfrac{1}{3}\left(3 - u_{ref\_g} - 2u_{ref\_h}\right)T_s - 2\dfrac{V_{0\_r}}{V_{dc}}\cdot T_s \\[2mm]
T_c = \dfrac{1}{3}\left(3 - 2u_{ref\_g} - u_{ref\_h}\right)T_s + 2\dfrac{V_{0\_r}}{V_{dc}}\cdot T_s
\end{cases}
\tag{36}
$$

$$
\mathrm{III}
\begin{cases}
T_a = \dfrac{1}{3}\left(3 - u_{ref\_g} - 2u_{ref\_h}\right)T_s + 2\dfrac{V_{0\_r}}{V_{dc}}\cdot T_s \\[2mm]
T_b = \dfrac{1}{3}\left(3 - 2u_{ref\_g} - u_{ref\_h}\right)T_s - 2\dfrac{V_{0\_r}}{V_{dc}}\cdot T_s \\[2mm]
T_c = \dfrac{1}{3}\left(3 + u_{ref\_g} - u_{ref\_h}\right)T_s - 2\dfrac{V_{0\_r}}{V_{dc}}\cdot T_s \quad (i_{sc} > 0) \\[2mm]
T_c = \dfrac{1}{3}\left(3 - u_{ref\_g} + u_{ref\_h}\right)T_s + 2\dfrac{V_{0\_r}}{V_{dc}}\cdot T_s \quad (i_{sc} < 0)
\end{cases}
\tag{37}
$$

$$
\mathrm{IV}
\begin{cases}
T_a = \dfrac{1}{3}\left(3 - 2u_{ref\_g} - u_{ref\_h}\right)T_s + 2\dfrac{V_{0\_r}}{V_{dc}}\cdot T_s \\[2mm]
T_b = \dfrac{1}{3}\left(3 - u_{ref\_g} + u_{ref\_h}\right)T_s - 2\dfrac{V_{0\_r}}{V_{dc}}\cdot T_s \quad (i_{sb} > 0) \\[2mm]
T_b = \dfrac{1}{3}\left(3 + u_{ref\_g} - u_{ref\_h}\right)T_s + 2\dfrac{V_{0\_r}}{V_{dc}}\cdot T_s \quad (i_{sb} < 0) \\[2mm]
T_c = \dfrac{1}{3}\left(3 - u_{ref\_g} - 2u_{ref\_h}\right)T_s - 2\dfrac{V_{0\_r}}{V_{dc}}\cdot T_s
\end{cases}
\tag{38}
$$

$$V \begin{cases} T_a = \frac{1}{3}\left(3 + u_{ref\_g} - u_{ref\_h}\right)T_s - 2\frac{V_{0\_r}}{V_{dc}} \cdot T_s \quad (i_{sa} > 0) \\ T_a = \frac{1}{3}\left(3 - u_{ref\_g} + u_{ref\_h}\right)T_s + 2\frac{V_{0\_r}}{V_{dc}} \cdot T_s \quad (i_{sa} < 0) \\ T_b = \frac{1}{3}\left(3 - u_{ref\_g} - 2u_{ref\_h}\right)T_s + 2\frac{V_{0\_r}}{V_{dc}} \cdot T_s \\ T_c = \frac{1}{3}\left(3 - 2u_{ref\_g} - u_{ref\_h}\right)T_s - 2\frac{V_{0\_r}}{V_{dc}} \cdot T_s \end{cases} \tag{39}$$

$$VI \begin{cases} T_a = \frac{1}{3}\left(3 - u_{ref\_g} - 2u_{ref\_h}\right)T_s - 2\frac{V_{0\_r}}{V_{dc}} \cdot T_s \\ T_b = \frac{1}{3}\left(3 - 2u_{ref\_g} - u_{ref\_h}\right)T_s + 2\frac{V_{0\_r}}{V_{dc}} \cdot T_s \\ T_c = \frac{1}{3}\left(3 - u_{ref\_g} + u_{ref\_h}\right)T_s - 2\frac{V_{0\_r}}{V_{dc}} \cdot T_s \quad (i_{sc} > 0) \\ T_c = \frac{1}{3}\left(3 + u_{ref\_g} - u_{ref\_h}\right)T_s + 2\frac{V_{0\_r}}{V_{dc}} \cdot T_s \quad (i_{sc} < 0) \end{cases} \tag{40}$$

Where, $T_a$, $T_b$, and $T_c$ denote the three phases switch actuation durations of a corresponding sector region. $u_{ref\_g}$ denotes the g-axis voltage component of the reference voltage in the *gh* coordinate system, and $u_{ref\_h}$ denotes the *h*-axis voltage component of the reference voltage in the *gh* coordinate system. $T_s$ denotes the switch actuation duration of each of the power switch devices. $V_{0\_r}$ denotes the zero-sequence reference voltage. $V_{dc}$ denotes the voltage across the DC side capacitor in the inverter circuit. $i_{sa}$, $i_{sb}$, and $i_{sc}$ denote currents of branches to which three phases filter inductors are connected, and positive directions of $i_{sa}$, $i_{sb}$, and $i_{sc}$ are all defined as directions pointing to the inverter.

In this embodiment, the computer device divides the vector space formed by the *gh* coordinate system into six sector regions through the improved 3D-SVPWM method, thereby avoiding the problem that calculation errors and zero-sequence component, which are caused by dividing each sector region into the sub-sector regions by the traditional 3D-SVPWM method, are difficult to be controlled, and improving superiority and reliability of the division of the six sub-sector regions. Further, the switch actuation duration of the power device in the inverter in each sector region is obtained to act as the sector region switch actuation duration of the corresponding sector region, thereby improving the flexibility and reliability of the acquirement of the sector region switch actuation duration.

It should be understood that, although the steps in the flowcharts of FIGS. 1, 2, 4, and 7-10 are shown in sequence according to the arrows, these steps are not necessarily executed in the sequence indicated by the arrows. Unless explicitly stated herein, the performing of these steps is not strictly limited to the order, and these steps may be performed in any other order. Moreover, at least part of the steps in FIGS. 1, 2, 4, and 7-10 may include multiple steps or multiple stages, and these steps or stages are not necessarily performed at the same time, but may be performed at different times. The execution sequence of these steps or stages is not necessarily carried out sequentially, but may be performed in turn or alternately with other steps or at least part of the steps or stages of the other steps.

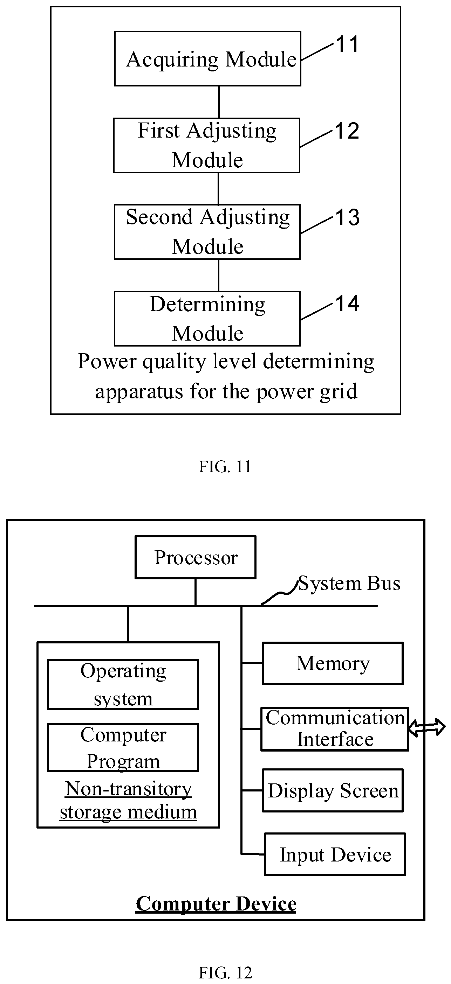

In an embodiment, as shown in FIG. 11, a power quality level determining apparatus for the power grid is provided and includes an acquiring module 11, a first adjusting module 12, a second adjusting module 13 and a determining module 14.

The acquiring module 11 is configured to obtain a harmonic current to be compensated and a harmonic voltage to be compensated in a power grid.

The first adjusting module 12 is configured to perform a current adjustment processing on the harmonic current to be compensated according to a compared result of the harmonic current to be compensated and the actual compensating current, to obtain an adjusted harmonic current, where, the actual compensating current includes an actual output current of the current adjusting inverter.

The second adjusting module 13 is configured to perform a voltage adjustment processing on a harmonic voltage to be compensated according to the harmonic voltage to be compensated and a pre-obtained object switch actuation duration, to obtain an adjusted harmonic voltage. Where, the object switch actuation duration includes a duration when the plurality of groups of power switch devices in the active power filter are controlled to be turned on or off.

The determining module 14 is configured to determine an object power quality level for the power grid according to the adjusted harmonic current and the adjusted harmonic voltage.

The acquiring module 11 may be specifically configured to obtain the three phases harmonic currents to be compensated at the moment $t$ and the three phases harmonic voltages to be compensated at the moment $t$ by the following equations:

$$i_{aN}^* = i_a - i_{a1} \quad, \quad i_{bN}^* = i_b - i_{b1} \quad, \quad i_{cN}^* = i_c - i_{c1} \quad; \quad u_{ac} = u_a - u_a^+ \quad, \quad u_{bc} = u_b - u_b^+ \quad, \quad u_{cc} = u_c - u_c^+$$

Where, $i_{aN}^*$ , $i_{bN}^*$ , and $i_{cN}^*$ denote the three phases harmonic currents to be compensated at the moment $t$, respectively. $i_a, i_b$, and $i_c$ denote the three phases currents of the phase-lock loop at the moment $t$, respectively. $i_{a1}, i_{b1}$, and $i_{c1}$ denote the three phases fundamental positive-sequence currents of the phase-lock loop at the moment $t$, respectively. $u_{ac}, u_{bc}$, and $u_{cc}$ denote the three phases harmonic voltages to be compensated at the moment $t$, respectively. $u_a^+$ , $u_b^+$ , and $u_c^+$ denote the three phases voltage positive-sequence components in the power grid at the moment $t$, respectively. $u_a, u_b, u_c$ denote the three phases power supply voltages in the power grid at the moment $t$, respectively.

The acquiring module 11 may also be specifically configured to obtain the three phases fundamental positive-sequence currents of the phase-lock loop at the moment $t$ by following equations:

$$\begin{cases} i_{a1} = i_{a1P} + i_{a1Q} \\ i_{b1} = i_{b1P} + i_{b1Q} \\ i_{c1} = i_{c1P} + i_{c1Q} \end{cases},$$

$$\begin{cases} i_{a1Q} = G_Q e_a = I_{1amp} \sin \varphi_{1a} \cos \omega t \\ i_{b1Q} = G_Q e_b = I_{1amp} \sin \varphi_{1a} \cos(\omega t - 120°) \\ i_{c1Q} = G_Q e_c = I_{1amp} \sin \varphi_{1a} \cos(\omega t + 120°) \end{cases},$$

and

$$\begin{cases} i_{a1P} = G_P e_a = I_{1amp} \cos \varphi_{1a} \sin \omega t \\ i_{b1P} = G_P e_b = I_{1amp} \cos \varphi_{1a} \sin(\omega t - 120°) \\ i_{c1P} = G_P e_c = I_{1amp} \cos \varphi_{1a} \sin(\omega t + 120°) \end{cases}$$

Where, $i_{a1}, i_{b1}$, and $i_{c1}$ denote the three phases fundamental positive-sequence currents of the phase-lock loop at the moment $t$, respectively. $i_{a1P}, i_{b1P}$, and $i_{c1P}$ denote the three phases fundamental positive-sequence active current components at the moment $t$, respectively. $i_{a1Q}, i_{b1Q}$, and $i_{c1Q}$ denote the three phases fundamental positive-sequence reactive current components at the moment $t$, respectively. $G_P$ denotes the active conductance DC component obtained by performing the low-pass filtering on the three-phase active conductance component of the phase-lock loop at the moment $t$. $G_Q$ denotes the reactive conductance DC component obtained by performing the low-pass filtering on the three-phase reactive conductance component of the phase-lock loop at the moment $t$. $e_a, e_b$, and $e_c$ denote the three phases reference voltages of the phase-lock loop at the moment t, respectively. $I_{1amp}$ denotes the positive-sequence current amplitude of the phase-lock loop. $\varphi_{1a}$ denotes the angle between the $a$-phase voltage and the $a$-phase fundamental positive-sequence current of the phase-lock loop. $\omega$ denotes an angular frequency of the power grid, and $\omega t$ denotes a changing phase angle of the power grid at the moment $t$.

The first adjusting module may specifically include: a first judging sub-module, a first adjusting sub-module, and a second adjusting sub-module.

Specifically, the first judging sub-module may be configured to judge whether the harmonic current to be compensated is greater than the actual compensating current, and whether the current difference between the harmonic current to be compensated and the actual compensating current is greater than or equal to a preset current threshold. The first adjusting sub-module may configured to, if the harmonic current to be compensated is greater than the actual compensating current, and if the current difference is greater than or equal to the preset current threshold, control the actual compensating current to be increased based on a PWM signal, and finally output a first adjusted harmonic current. The second adjusting sub-module may be configured to, if the harmonic current to be compensated is less than or equal to the actual compensating current, and if the current difference is less than the preset current threshold, control the actual compensating current to be decreased based on the PWM signal, and finally output a second adjusted harmonic current. The first adjusted harmonic current includes a current outputted when the harmonic current to be compensated is adjusted to increase to a first preset current threshold, the PWM signal is a signal generated by the hysteresis comparator after the harmonic current to be compensated and the actual compensating current are inputted into the hysteresis comparator; and the second adjusted harmonic current is a current outputted when the harmonic current to be compensated is adjusted to decrease to a second preset current threshold.

The first adjusting sub-module may be configured to obtain a result by using $i^* + \int_0^t \left( V_{dc} / L_s \right) dt$.

The second adjusting sub-module may be configured to obtain a result by using $i^* - \int_0^t \left( V_{dc} / L_s \right) dt$. $i^*$ denotes the compensating current used at the moment of switching the hysteresis control, $V_{dc}$ denotes a voltage across the DC side capacitor in the inverter circuit, and $L_s$ denotes a filter inductance used for compensating the harmonic current.

The second adjusting module may specifically include a dividing sub-module, a first determining sub-module, and a third adjusting sub-module.

Specifically, the dividing sub-module may configure to divide a vector space formed by the *gh* coordinate system into sector regions by taking 0 degree as a starting point and at an interval of a set angle, to obtain a plurality of sector regions. The first determining sub-module may be configured to obtain a sector region switch actuation duration of each sector region, and select one sector region switch actuation duration from a plurality of obtained sector regions switch actuation durations to act as an object switch actuation duration. The third adjusting sub-module is configured to input the harmonic voltage to be compensated into a preset harmonic voltage adjusting circuit, and use the output voltage of the harmonic voltage adjusting model circuit as an adjusted harmonic voltage. The sector region switch actuation duration is configured to characterize a switch actuation duration of a power device in the inverter in a corresponding sector region. The harmonic voltage adjusting circuit includes a plurality of groups of power switch devices and load elements, which are connected in a preset connection manner, and the plurality of groups of power switch devices are turned on or off according to the object switch actuation duration.

The dividing sub-module is further configured to calculate switch actuation durations of sector regions I through VI by the following equations:

$$
I \begin{cases}
T_a = \frac{1}{3}\left(3 - 2u_{ref\_g} - u_{ref\_h}\right)T_s - 2\frac{V_{0\_r}}{V_{dc}} \cdot T_s \\[2mm]
T_b = \frac{1}{3}\left(3 + u_{ref\_g} - u_{ref\_h}\right)T_s - 2\frac{V_{0\_r}}{V_{dc}} \cdot T_s \quad (i_{sb} > 0) \\[2mm]
T_b = \frac{1}{3}\left(3 - u_{ref\_g} + u_{ref\_h}\right)T_s + 2\frac{V_{0\_r}}{V_{dc}} \cdot T_s \quad (i_{sb} < 0) \\[2mm]
T_c = \frac{1}{3}\left(3 - u_{ref\_g} - 2u_{ref\_h}\right)T_s + 2\frac{V_{0\_r}}{V_{dc}} \cdot T_s
\end{cases}
$$

$$
II \begin{cases}
T_a = \frac{1}{3}\left(3 - u_{ref\_g} + u_{ref\_h}\right)T_s - 2\frac{V_{0\_r}}{V_{dc}} \cdot T_s \quad (i_{sa} > 0) \\[2mm]
T_a = \frac{1}{3}\left(3 + u_{ref\_g} - u_{ref\_h}\right)T_s + 2\frac{V_{0\_r}}{V_{dc}} \cdot T_s \quad (i_{sa} < 0) \\[2mm]
T_b = \frac{1}{3}\left(3 - u_{ref\_g} - 2u_{ref\_h}\right)T_s - 2\frac{V_{0\_r}}{V_{dc}} \cdot T_s \\[2mm]
T_c = \frac{1}{3}\left(3 - 2u_{ref\_g} - u_{ref\_h}\right)T_s + 2\frac{V_{0\_r}}{V_{dc}} \cdot T_s
\end{cases}
$$

$$\text{III}\begin{cases} T_a = \dfrac{1}{3}\left(3 - u_{ref\_g} - 2u_{ref\_h}\right)T_s + 2\dfrac{V_{0\_r}}{V_{dc}}\cdot T_s \\[2mm] T_b = \dfrac{1}{3}\left(3 - 2u_{ref\_g} - u_{ref\_h}\right)T_s - 2\dfrac{V_{0\_r}}{V_{dc}}\cdot T_s \\[2mm] T_c = \dfrac{1}{3}\left(3 + u_{ref\_g} - u_{ref\_h}\right)T_s - 2\dfrac{V_{0\_r}}{V_{dc}}\cdot T_s \quad (i_{sc} > 0) \\[2mm] T_c = \dfrac{1}{3}\left(3 - u_{ref\_g} + u_{ref\_h}\right)T_s + 2\dfrac{V_{0\_r}}{V_{dc}}\cdot T_s \quad (i_{sc} < 0) \end{cases},$$

$$\text{IV}\begin{cases} T_a = \dfrac{1}{3}\left(3 - 2u_{ref\_g} - u_{ref\_h}\right)T_s + 2\dfrac{V_{0\_r}}{V_{dc}}\cdot T_s \\[2mm] T_b = \dfrac{1}{3}\left(3 - u_{ref\_g} + u_{ref\_h}\right)T_s - 2\dfrac{V_{0\_r}}{V_{dc}}\cdot T_s \quad (i_{sb} > 0) \\[2mm] T_b = \dfrac{1}{3}\left(3 + u_{ref\_g} - u_{ref\_h}\right)T_s + 2\dfrac{V_{0\_r}}{V_{dc}}\cdot T_s \quad (i_{sb} < 0) \\[2mm] T_c = \dfrac{1}{3}\left(3 - u_{ref\_g} - 2u_{ref\_h}\right)T_s - 2\dfrac{V_{0\_r}}{V_{dc}}\cdot T_s \end{cases}$$

$$\text{V}\begin{cases} T_a = \dfrac{1}{3}\left(3 + u_{ref\_g} - u_{ref\_h}\right)T_s - 2\dfrac{V_{0\_r}}{V_{dc}}\cdot T_s \quad (i_{sa} > 0) \\[2mm] T_a = \dfrac{1}{3}\left(3 - u_{ref\_g} + u_{ref\_h}\right)T_s + 2\dfrac{V_{0\_r}}{V_{dc}}\cdot T_s \quad (i_{sa} < 0) \\[2mm] T_b = \dfrac{1}{3}\left(3 - u_{ref\_g} - 2u_{ref\_h}\right)T_s + 2\dfrac{V_{0\_r}}{V_{dc}}\cdot T_s \\[2mm] T_c = \dfrac{1}{3}\left(3 - 2u_{ref\_g} - u_{ref\_h}\right)T_s - 2\dfrac{V_{0\_r}}{V_{dc}}\cdot T_s \end{cases},$$

$$\text{VI}\begin{cases} T_a = \dfrac{1}{3}\left(3 - u_{ref\_g} - 2u_{ref\_h}\right)T_s - 2\dfrac{V_{0\_r}}{V_{dc}}\cdot T_s \\[2mm] T_b = \dfrac{1}{3}\left(3 - 2u_{ref\_g} - u_{ref\_h}\right)T_s + 2\dfrac{V_{0\_r}}{V_{dc}}\cdot T_s \\[2mm] T_c = \dfrac{1}{3}\left(3 - u_{ref\_g} + u_{ref\_h}\right)T_s - 2\dfrac{V_{0\_r}}{V_{dc}}\cdot T_s \quad (i_{sc} > 0) \\[2mm] T_c = \dfrac{1}{3}\left(3 + u_{ref\_g} - u_{ref\_h}\right)T_s + 2\dfrac{V_{0\_r}}{V_{dc}}\cdot T_s \quad (i_{sc} < 0) \end{cases}.$$

Where, $T_a$, $T_b$, and $T_c$ denote the three phases switch actuation durations of a corresponding sector region. $u_{ref\_g}$ denotes the $g$-axis voltage component of the reference voltage in the $gh$ coordinate system, and $u_{ref\_h}$ denotes the $h$-axis voltage component of the reference voltage in the $gh$ coordinate system. $T_s$ denotes the switch actuation duration of each of the power switch devices. $V_{0\_r}$ denotes the zero-sequence reference voltage. $V_{dc}$ denotes the voltage across the DC side capacitor in the inverter circuit. $i_{sa}$, $i_{sb}$, and $i_{sc}$ denote currents of branches to which three phases filter inductors are connected, respectively, and positive directions of $i_{sa}$, $i_{sb}$, and $i_{sc}$ are all defined as directions pointing to the inverter.

The determining module 14 may specifically include a second determining sub-module, a second judging sub-module, a third determining sub-module and a fourth determining sub-module.

Specifically, the second determining sub-module may be configured to perform a Fourier transform processing on the adjusted harmonic current and the adjusted harmonic voltage, to calculate a total harmonic distortion of a current and a voltage at a power grid side. The second judging sub-module may be configured to determine whether the total harmonic distortion satisfies a preset distortion threshold or not. The third determining sub-module may be configured to, if yes, determine the object power quality level according to the total harmonic distortion. The fourth determining sub-module may be configured to, if not, use $t+l\Delta t$ as a new $t$, and use $l+1$ a new $l$, and perform continuously the step of calculating the total harmonic distortion of the current and the voltage at the power grid side until the object power quality level is obtained. Where $l$ is an integer greater than or equal to 0, $l = 0,1,2,3$ and the like, $l$ denotes the number of recalculations for the total harmonic distortion, and an initial value of $l$ is 0, and $\Delta t$ denotes a preset time interval.

The second determining sub-module may also be specifically configured to obtain the harmonic distortion of the current and the harmonic distortion of the voltage by the following equations:

$$THD_I = \frac{\sqrt{\sum_{k=2}^{n} I_k^2}}{I_1} \times 100\% , \quad THD_U = \frac{\sqrt{\sum_{k=2}^{n} U_k^2}}{U_1} \times 100\%$$

Where, $THD_I$ denotes the harmonic distortion of the current, $I_k$ denotes an effective value of a $k$-order harmonic current, $I_1$ denotes an effective value of a fundamental current, $THD_U$ denotes the harmonic distortion of the voltage, $U_k$ denotes an effective value of a k-order harmonic voltage, and $U_1$ denotes an effective value of a fundamental voltage.

For the specific limitations of the power quality level determining apparatus for the power grid, please refer to the limitations of the power quality level determining method for the power grid above, and they will not be described repeatedly herein. Each module in the above-mentioned power quality level determining apparatus for the power grid may be implemented wholly or in part by software, hardware, and combinations thereof. The above modules may be embedded in or independent of the processor of the computer device in the form of hardware, or stored in the memory of the computer device in the form of software, so that the processor may call and execute corresponding operations of the above modules.

In an embodiment, a computer device is provided, and the computer device may be a terminal, and its internal structure diagram may be shown in FIG. 12. The computer device includes a processor, a memory, a communication interface, a display screen, and an input device, which are connected by a system bus. The processor of the computer device is configured to provide computing and control capabilities. The memory of the computer device includes a non-transitory storage medium, an internal memory. The non-transitory storage medium stores an operating system and a computer program. The internal memory provides an environment for the execution of the operating system and computer program in the non-transitory storage medium. The communication interface of the computer device is used for wired or wireless communication with an external terminal, and the wireless communication may be realized by WIFI, operator network, NFC (Near Field Communication) or other technologies. The computer program, when executed by the processor, implements the power quality level determining method for the power grid. The display screen of the computer device may be a liquid crystal display screen or an electronic ink display screen, and the input device of the computer device may be a touch layer covering the display screen, or a button, a trackball or a touchpad arranged on the shell of the computer device, or an externally connected keyboard, trackpad, or mouse.

Those skilled in the art may understand that the structure shown in FIG. 12 is only a block diagram illustrating a partial structure related to the solution of the present application, and does not constitute a limitation on the computer device to which the solution of the present application is applied. The computer device may specifically include more or fewer components than those shown in the figures, or may combine certain components, or may have a different arrangement of components.

In an embodiment, a computer device is provided, and includes a memory and a processor. The computer program is stored in the memory, and the processor, when executing the computer program, implements the following steps.

A harmonic current to be compensated and a harmonic voltage to be compensated in a power grid are obtained.

A current adjustment processing is performed on the harmonic current to be compensated according to a compared result of the harmonic current to be compensated and the actual compensating current, to obtain an adjusted harmonic current, where, the actual compensating current includes an actual output current of the current adjusting inverter.

A voltage adjustment processing is performed on the harmonic voltage to be compensated according to the harmonic voltage to be compensated and a pre-obtained object switch actuation duration, to obtain an adjusted harmonic voltage. Where, the object switch actuation duration includes a duration when the plurality of groups of power switch devices in the active power filter are controlled to be turned on or off.

An object power quality level for the power grid is determined according to the adjusted harmonic current and the adjusted harmonic voltage.

In an embodiment, the processor, when executing the computer program, further implements the following steps.

It is judged whether the harmonic current to be compensated is greater than the actual compensating current, and whether the current difference between the harmonic current to be compensated and the actual compensating current is greater than or equal to a preset current threshold. If the harmonic current to be compensated is greater than the actual compensating current, and if the current difference is greater than or equal to the preset current threshold, the actual compensating current is controlled to be increased based on a PWM signal, and finally a first adjusted harmonic current is outputted. If the harmonic current to be compensated is less than or equal to the actual compensating current, and if the current difference is less than the preset current threshold, the actual compensating current is controlled to be decreased based on the PWM signal, and finally a second adjusted harmonic current is outputted. Where, the first adjusted harmonic current includes a current outputted when the harmonic current to be compensated is adjusted to increase to a first preset current threshold, the PWM signal is a signal generated by the hysteresis comparator after the harmonic current to be compensated and the actual compensating current are inputted into the hysteresis comparator, and the second adjusted harmonic current is a current outputted when the harmonic current to be compensated is adjusted to decrease to a second preset current threshold.

In an embodiment, the processor, when executing the computer program, further implements the following steps.

The first adjusted harmonic current includes a result obtained by using $i^* + \int_0^t (V_{dc}/L_s)dt$, and the second adjusted harmonic current includes a result obtained by using $i^* - \int_0^t (V_{dc}/L_s)dt$. Where, $i^*$ denotes the compensating current used at the moment of switching the hysteresis control, $V_{dc}$ denotes a voltage across the DC side capacitor in the inverter circuit, and $L_s$ denotes a filter inductance used for compensating the harmonic current.

In an embodiment, the processor, when executing the computer program, further implements the following steps.

A vector space formed by the *gh* coordinate system is divided into sector regions by taking 0 degree as a starting point and at an interval of a set angle, to obtain a plurality of sector regions. A sector region switch actuation duration of each sector region is obtained, and one sector region switch actuation duration is select from a plurality of obtained sector regions switch actuation durations to act as an object switch actuation duration. The harmonic voltage to be compensated is inputted into a preset harmonic voltage adjusting circuit, and the output voltage of the harmonic voltage adjusting model circuit is used as an adjusted harmonic voltage. The sector region switch actuation duration is configured to characterize a switch actuation duration of a power device in the inverter in a corresponding sector region. The harmonic voltage adjusting circuit includes a plurality of groups of power switch devices and load elements, which are connected in a preset connection manner, and the plurality of groups of power switch devices are turned on or off according to the object switch actuation duration.

In an embodiment, the processor, when executing the computer program, further implements the following steps.

Switch actuation durations of sector regions I through VI are calculated through the following equations:

$$I\begin{cases} T_a = \frac{1}{3}(3 - 2u_{ref\_g} - u_{ref\_h})T_s - 2\frac{V_{0\_r}}{V_{dc}} \cdot T_s \\ T_b = \frac{1}{3}(3 + u_{ref\_g} - u_{ref\_h})T_s - 2\frac{V_{0\_r}}{V_{dc}} \cdot T_s \quad (i_{sb} > 0) \\ T_b = \frac{1}{3}(3 - u_{ref\_g} + u_{ref\_h})T_s + 2\frac{V_{0\_r}}{V_{dc}} \cdot T_s \quad (i_{sb} < 0) \\ T_c = \frac{1}{3}(3 - u_{ref\_g} - 2u_{ref\_h})T_s + 2\frac{V_{0\_r}}{V_{dc}} \cdot T_s \end{cases},$$

$$\text{II} \begin{cases} T_a = \dfrac{1}{3}\left(3 - u_{ref\_g} + u_{ref\_h}\right)T_s - 2\dfrac{V_{0\_r}}{V_{dc}} \cdot T_s \quad (i_{sa} > 0) \\[3mm] T_a = \dfrac{1}{3}\left(3 + u_{ref\_g} - u_{ref\_h}\right)T_s + 2\dfrac{V_{0\_r}}{V_{dc}} \cdot T_s \quad (i_{sa} < 0) \\[3mm] T_b = \dfrac{1}{3}\left(3 - u_{ref\_g} - 2u_{ref\_h}\right)T_s - 2\dfrac{V_{0\_r}}{V_{dc}} \cdot T_s \\[3mm] T_c = \dfrac{1}{3}\left(3 - 2u_{ref\_g} - u_{ref\_h}\right)T_s + 2\dfrac{V_{0\_r}}{V_{dc}} \cdot T_s \end{cases}$$

$$\text{III} \begin{cases} T_a = \dfrac{1}{3}\left(3 - u_{ref\_g} - 2u_{ref\_h}\right)T_s + 2\dfrac{V_{0\_r}}{V_{dc}} \cdot T_s \\[3mm] T_b = \dfrac{1}{3}\left(3 - 2u_{ref\_g} - u_{ref\_h}\right)T_s - 2\dfrac{V_{0\_r}}{V_{dc}} \cdot T_s \\[3mm] T_c = \dfrac{1}{3}\left(3 + u_{ref\_g} - u_{ref\_h}\right)T_s - 2\dfrac{V_{0\_r}}{V_{dc}} \cdot T_s \quad (i_{sc} > 0) \\[3mm] T_c = \dfrac{1}{3}\left(3 - u_{ref\_g} + u_{ref\_h}\right)T_s + 2\dfrac{V_{0\_r}}{V_{dc}} \cdot T_s \quad (i_{sc} < 0) \end{cases} \quad ,$$

$$\text{IV} \begin{cases} T_a = \dfrac{1}{3}\left(3 - 2u_{ref\_g} - u_{ref\_h}\right)T_s + 2\dfrac{V_{0\_r}}{V_{dc}} \cdot T_s \\[3mm] T_b = \dfrac{1}{3}\left(3 - u_{ref\_g} + u_{ref\_h}\right)T_s - 2\dfrac{V_{0\_r}}{V_{dc}} \cdot T_s \quad (i_{sb} > 0) \\[3mm] T_b = \dfrac{1}{3}\left(3 + u_{ref\_g} - u_{ref\_h}\right)T_s + 2\dfrac{V_{0\_r}}{V_{dc}} \cdot T_s \quad (i_{sb} < 0) \\[3mm] T_c = \dfrac{1}{3}\left(3 - u_{ref\_g} - 2u_{ref\_h}\right)T_s - 2\dfrac{V_{0\_r}}{V_{dc}} \cdot T_s \end{cases} \quad ,$$

$$\text{V} \begin{cases} T_a = \dfrac{1}{3}\left(3 + u_{ref\_g} - u_{ref\_h}\right)T_s - 2\dfrac{V_{0\_r}}{V_{dc}} \cdot T_s \quad (i_{sa} > 0) \\[3mm] T_a = \dfrac{1}{3}\left(3 - u_{ref\_g} + u_{ref\_h}\right)T_s + 2\dfrac{V_{0\_r}}{V_{dc}} \cdot T_s \quad (i_{sa} < 0) \\[3mm] T_b = \dfrac{1}{3}\left(3 - u_{ref\_g} - 2u_{ref\_h}\right)T_s + 2\dfrac{V_{0\_r}}{V_{dc}} \cdot T_s \\[3mm] T_c = \dfrac{1}{3}\left(3 - 2u_{ref\_g} - u_{ref\_h}\right)T_s - 2\dfrac{V_{0\_r}}{V_{dc}} \cdot T_s \end{cases} \quad ,$$

$$VI \begin{cases} T_a = \frac{1}{3}\left(3 - u_{ref\_g} - 2u_{ref\_h}\right)T_s - 2\frac{V_{0\_r}}{V_{dc}} \cdot T_s \\[2mm] T_b = \frac{1}{3}\left(3 - 2u_{ref\_g} - u_{ref\_h}\right)T_s + 2\frac{V_{0\_r}}{V_{dc}} \cdot T_s \\[2mm] T_c = \frac{1}{3}\left(3 - u_{ref\_g} + u_{ref\_h}\right)T_s - 2\frac{V_{0\_r}}{V_{dc}} \cdot T_s \quad (i_{sc} > 0) \\[2mm] T_c = \frac{1}{3}\left(3 + u_{ref\_g} - u_{ref\_h}\right)T_s + 2\frac{V_{0\_r}}{V_{dc}} \cdot T_s \quad (i_{sc} < 0) \end{cases}$$

Where, $T_a$, $T_b$, and $T_c$ denote the three phases switch actuation durations of a corresponding sector region. $u_{ref\_g}$ denotes the g-axis voltage component of the reference voltage in the *gh* coordinate system, and $u_{ref\_h}$ denotes the *h*-axis voltage component of the reference voltage in the *gh* coordinate system. $T_s$ denotes the switch actuation duration of each of the power switch devices. $V_{0\_r}$ denotes the zero-sequence reference voltage. $V_{dc}$ denotes the voltage across the DC side capacitor in the inverter circuit. $i_{sa}$, $t_{sb}$, and $i_{sc}$ denote currents of branches to which three phases filter inductors are connected, respectively, and positive directions of $i_{sa}$, $t_{sb}$ and $i_{sc}$ are all defined as directions pointing to the inverter.

In an embodiment, the processor, when executing the computer program, further implements the following steps.

The three phases harmonic currents to be compensated at the moment *t* and the three phases harmonic voltages to be compensated at the moment *t* are obtained by the following equations:

$$i_{aN}^* = i_a - i_{a1} \quad, \quad i_{bN}^* = i_b - i_{b1} \quad, \quad i_{cN}^* = i_c - i_{c1} \; ; \; u_{ac} = u_a - u_a^+ \quad, \quad u_{bc} = u_b - u_b^+ \quad, \quad u_{cc} = u_c - u_c^+$$

Where, $i_{aN}^*$, $i_{bN}^*$, and $i_{cN}^*$ denote the three phases harmonic currents to be compensated at the moment *t*, respectively. $i_a$, $i_b$, and $i_c$ denote the three phases currents of the phase-lock loop at the moment *t*, respectively. $i_{a1}$, $t_{b1}$, and $i_{c1}$ denote the three phases fundamental positive-sequence currents of the phase-lock loop at the moment *t*, respectively. $u_{ac}$, $u_{bc}$, and $u_{cc}$ denote the three phases harmonic voltages to be compensated at the moment *t*, respectively. $u_a^+$, $u_b^+$, and $u_c^+$ denote the three phases voltage positive-sequence components in the power grid at the moment *t*, respectively. $u_a$, $u_b$, $u_c$ denote the three phases power supply voltages in the power grid at the moment *t*, respectively.

In an embodiment, the processor, when executing the computer program, further implements the following steps.

$i_{a1}$, $i_{b1}$, and $i_{c1}$ denote the three phases fundamental positive-sequence currents of the phase-lock loop at the moment *t*, respectively, and are obtained by following equations:

$$\begin{cases} i_{a1} = i_{a1P} + i_{a1Q} \\ i_{b1} = i_{b1P} + i_{b1Q} \\ i_{c1} = i_{c1P} + i_{c1Q} \end{cases},$$

$$\begin{cases} i_{a1Q} = G_Q e_a = I_{1amp} \sin \varphi_{1a} \cos \omega t \\ i_{b1Q} = G_Q e_b = I_{1amp} \sin \varphi_{1a} \cos(\omega t - 120°) \\ i_{c1Q} = G_Q e_c = I_{1amp} \sin \varphi_{1a} \cos(\omega t + 120°) \end{cases},$$

and

$$\begin{cases} i_{a1P} = G_P e_a = I_{1amp} \cos \varphi_{1a} \sin \omega t \\ i_{b1P} = G_P e_b = I_{1amp} \cos \varphi_{1a} \sin(\omega t - 120°) \\ i_{c1P} = G_P e_c = I_{1amp} \cos \varphi_{1a} \sin(\omega t + 120°) \end{cases}$$

Where, $i_{a1P}$, $i_{b1P}$, and $i_{c1P}$ denote the three phases fundamental positive-sequence active current components at the moment *t*, respectively. $i_{a1Q}$, $i_{b1Q}$, and $i_{c1Q}$ denote the three phases fundamental positive-sequence reactive current components at the moment *t*, respectively. $G_P$ denotes the active conductance DC component obtained by performing the low-pass filtering on the three-phase active conductance component of the phase-lock loop at the moment *t*. $G_Q$ denotes the reactive conductance DC component obtained by performing the low-pass filtering on the three-phase reactive conductance component of the phase-lock loop at the moment *t*, respectively. $e_a$, $e_b$, and $e_c$ denote the three phases reference voltages of the phase-lock loop at the moment *t*, respectively. $I_{1amp}$ denotes the positive-sequence current amplitude of the phase-lock loop. $\varphi_{1a}$ denotes the angle between the *a*-phase voltage and the *a*-phase fundamental positive-sequence current of the phase-lock loop. $\omega$ denotes an angular frequency of the power grid, and $\omega t$ denotes a changing phase angle of the power grid at the moment *t*.

According to the invention, the processor, when executing the computer program, further implements the following steps.

A Fourier transform processing is performed on the adjusted harmonic current and the adjusted harmonic voltage, to calculate a total harmonic distortion of a current and a voltage at a power grid side.

It is determined whether the total harmonic distortion satisfies a preset distortion threshold or not.

If yes, object power quality level is determined according to the total harmonic distortion.

If not, $t+l\Delta t$ is used as a new *t*, *l*+1 is used as a new *l*, and the step of calculating the total harmonic distortion of the current and the voltage at the power grid side is performed continuously until the object power quality level is obtained. Where *l* is an integer greater than or equal to 0, *l* = 0,1,2,3 and the like, *l* denotes the number of recalculations for the total harmonic distortion, and an initial value of *l* is 0, and $\Delta t$ denotes a preset time interval.

In an embodiment, the processor, when executing the computer program, further implements the following steps.

The calculating a total harmonic distortion of a current and a voltage at a power grid side includes obtaining the harmonic distortion of the current and the harmonic distortion of the voltage by the following equations:

$$THD_I = \frac{\sqrt{\sum_{k=2}^{n} I_k^2}}{I_1} \times 100\% , \quad THD_U = \frac{\sqrt{\sum_{k=2}^{n} U_k^2}}{U_1} \times 100\%$$

Where, $THD_I$ denotes the harmonic distortion of the current, $I_k$ denotes an effective value of a *k*-order harmonic current, $I_1$ denotes an effective value of a fundamental current, $THD_U$ denotes the harmonic distortion of the voltage, $U_k$ denotes an effective value of a k-order harmonic voltage, and $U_1$ denotes an effective value of a fundamental voltage.

It should be noted that, the process of executing the computer program by the processor in the embodiment of the present application is consistent with the execution process of each step in the above method, and for details, reference may be made to the above description.

In an embodiment, a computer-readable storage medium is provided. A computer program is stored on the computer-readable storage medium. The computer program, when executed by a processor, causes the processor to perform the following steps.

A harmonic current to be compensated and a harmonic voltage to be compensated in a power grid are obtained.

A current adjustment processing is performed on the harmonic current to be compensated according to a compared result of the harmonic current to be compensated and the actual compensating current, to obtain an adjusted harmonic current, where, the actual compensating current includes an actual output current of the current adjusting inverter.

A voltage adjustment processing is performed on a harmonic voltage to be compensated according to the harmonic voltage to be compensated and a pre-obtained object switch actuation duration, to obtain an adjusted harmonic voltage. Where, the object switch actuation duration includes a duration when the plurality of groups of power switch devices in the active power filter are controlled to be turned on or off.

An object power quality level for the power grid is determined according to the adjusted harmonic current and the adjusted harmonic voltage.

In an embodiment, the computer program, when executed by the processor, causes the processor to perform the following steps.

It is judged whether the harmonic current to be compensated is greater than the actual compensating current, and whether the current difference between the harmonic current to be compensated and the actual compensating current is greater than or equal to a preset current threshold. If the harmonic current to be compensated is greater than the actual compensating current, and if the current difference is greater than or equal to the preset current threshold, the actual compensating current is controlled to be increased based on a PWM signal, and finally a first adjusted harmonic current is outputted. If the harmonic current to be compensated is less than or equal to the actual compensating current, and if the current difference is less than the preset current threshold, the actual compensating current is controlled to be decreased based on the PWM signal, and finally a second adjusted harmonic current is outputted. Where, the first adjusted harmonic current includes a current outputted when the harmonic current to be compensated is adjusted to increase to a first preset current threshold, the PWM signal is a signal generated by the hysteresis comparator after the harmonic current to be compensated and the actual compensating current are inputted into the hysteresis comparator, and the second adjusted harmonic current is a current outputted when the harmonic current to be compensated is adjusted to decrease to a second preset current threshold.

In an embodiment, the computer program, when executed by the processor, causes the processor to perform the following steps.

The first adjusted harmonic current includes a result obtained by using $i^* + \int_0^t \left( V_{dc} / L_s \right) dt$, and the second adjusted harmonic current includes a result obtained by using $i^* - \int_0^t \left( V_{dc} / L_s \right) dt$. $i^*$ denotes the compensating current used at the moment of switching the hysteresis control, $V_{dc}$ denotes a voltage across the DC side capacitor in the inverter circuit, and $L_s$ denotes a filter inductance used for compensating the harmonic current.

In an embodiment, the computer program, when executed by the processor, causes the processor to perform the following steps.

A vector space formed by the *gh* coordinate system is divided into sector regions by taking 0 degree as a starting point and at an interval of a set angle, to obtain a plurality of sector regions. A sector region switch actuation duration of each sector region is obtained, and one sector region switch actuation duration is select from a plurality of obtained sector regions switch actuation durations to act as an object switch actuation duration. The harmonic voltage to be compensated is inputted into a preset harmonic voltage adjusting circuit, and the output voltage of the harmonic voltage adjusting model circuit is used as an adjusted harmonic voltage. The sector region switch actuation duration is configured to characterize a switch actuation duration of a power device in the inverter in a corresponding sector region. The harmonic voltage adjusting circuit includes a plurality of groups of power switch devices and load elements, which are connected in a preset connection manner, and the plurality of groups of power switch devices are turned on or off according to the object switch actuation duration.

In an embodiment, the computer program, when executed by the processor, causes the processor to perform the following steps.

Switch actuation durations of sector regions I through VI are calculated through the following equations:

$$
\mathrm{I} \left\{
\begin{aligned}
T_a &= \frac{1}{3}\left( 3 - 2u_{ref\_g} - u_{ref\_h} \right) T_s - 2\frac{V_{0\_r}}{V_{dc}} \cdot T_s \\
T_b &= \frac{1}{3}\left( 3 + u_{ref\_g} - u_{ref\_h} \right) T_s - 2\frac{V_{0\_r}}{V_{dc}} \cdot T_s \quad (i_{sb} > 0) \\
T_b &= \frac{1}{3}\left( 3 - u_{ref\_g} + u_{ref\_h} \right) T_s + 2\frac{V_{0\_r}}{V_{dc}} \cdot T_s \quad (i_{sb} < 0) \\
T_c &= \frac{1}{3}\left( 3 - u_{ref\_g} - 2u_{ref\_h} \right) T_s + 2\frac{V_{0\_r}}{V_{dc}} \cdot T_s
\end{aligned}
\right. ,
$$

$$
\mathrm{II} \left\{
\begin{aligned}
T_a &= \frac{1}{3}\left( 3 - u_{ref\_g} + u_{ref\_h} \right) T_s - 2\frac{V_{0\_r}}{V_{dc}} \cdot T_s \quad (i_{sa} > 0) \\
T_a &= \frac{1}{3}\left( 3 + u_{ref\_g} - u_{ref\_h} \right) T_s + 2\frac{V_{0\_r}}{V_{dc}} \cdot T_s \quad (i_{sa} < 0) \\
T_b &= \frac{1}{3}\left( 3 - u_{ref\_g} - 2u_{ref\_h} \right) T_s - 2\frac{V_{0\_r}}{V_{dc}} \cdot T_s \\
T_c &= \frac{1}{3}\left( 3 - 2u_{ref\_g} - u_{ref\_h} \right) T_s + 2\frac{V_{0\_r}}{V_{dc}} \cdot T_s
\end{aligned}
\right. ,
$$

$$\text{III} \begin{cases} T_a = \frac{1}{3}\left(3 - u_{ref\_g} - 2u_{ref\_h}\right)T_s + 2\frac{V_{0\_r}}{V_{dc}} \cdot T_s \\[2mm] T_b = \frac{1}{3}\left(3 - 2u_{ref\_g} - u_{ref\_h}\right)T_s - 2\frac{V_{0\_r}}{V_{dc}} \cdot T_s \\[2mm] T_c = \frac{1}{3}\left(3 + u_{ref\_g} - u_{ref\_h}\right)T_s - 2\frac{V_{0\_r}}{V_{dc}} \cdot T_s \quad (i_{sc} > 0) \\[2mm] T_c = \frac{1}{3}\left(3 - u_{ref\_g} + u_{ref\_h}\right)T_s + 2\frac{V_{0\_r}}{V_{dc}} \cdot T_s \quad (i_{sc} < 0) \end{cases},$$

$$\text{IV} \begin{cases} T_a = \frac{1}{3}\left(3 - 2u_{ref\_g} - u_{ref\_h}\right)T_s + 2\frac{V_{0\_r}}{V_{dc}} \cdot T_s \\[2mm] T_b = \frac{1}{3}\left(3 - u_{ref\_g} + u_{ref\_h}\right)T_s - 2\frac{V_{0\_r}}{V_{dc}} \cdot T_s \quad (i_{sb} > 0) \\[2mm] T_b = \frac{1}{3}\left(3 + u_{ref\_g} - u_{ref\_h}\right)T_s + 2\frac{V_{0\_r}}{V_{dc}} \cdot T_s \quad (i_{sb} < 0) \\[2mm] T_c = \frac{1}{3}\left(3 - u_{ref\_g} - 2u_{ref\_h}\right)T_s - 2\frac{V_{0\_r}}{V_{dc}} \cdot T_s \end{cases},$$

$$\text{V} \begin{cases} T_a = \frac{1}{3}\left(3 + u_{ref\_g} - u_{ref\_h}\right)T_s - 2\frac{V_{0\_r}}{V_{dc}} \cdot T_s \quad (i_{sa} > 0) \\[2mm] T_a = \frac{1}{3}\left(3 - u_{ref\_g} + u_{ref\_h}\right)T_s + 2\frac{V_{0\_r}}{V_{dc}} \cdot T_s \quad (i_{sa} < 0) \\[2mm] T_b = \frac{1}{3}\left(3 - u_{ref\_g} - 2u_{ref\_h}\right)T_s + 2\frac{V_{0\_r}}{V_{dc}} \cdot T_s \\[2mm] T_c = \frac{1}{3}\left(3 - 2u_{ref\_g} - u_{ref\_h}\right)T_s - 2\frac{V_{0\_r}}{V_{dc}} \cdot T_s \end{cases},$$

$$\text{VI} \begin{cases} T_a = \frac{1}{3}\left(3 - u_{ref\_g} - 2u_{ref\_h}\right)T_s - 2\frac{V_{0\_r}}{V_{dc}} \cdot T_s \\[2mm] T_b = \frac{1}{3}\left(3 - 2u_{ref\_g} - u_{ref\_h}\right)T_s + 2\frac{V_{0\_r}}{V_{dc}} \cdot T_s \\[2mm] T_c = \frac{1}{3}\left(3 - u_{ref\_g} + u_{ref\_h}\right)T_s - 2\frac{V_{0\_r}}{V_{dc}} \cdot T_s \quad (i_{sc} > 0) \\[2mm] T_c = \frac{1}{3}\left(3 + u_{ref\_g} - u_{ref\_h}\right)T_s + 2\frac{V_{0\_r}}{V_{dc}} \cdot T_s \quad (i_{sc} < 0) \end{cases}.$$

Where, $T_a$, $T_b$, and $T_c$ denote the three phases switch actuation durations of a corresponding sector region. $u_{ref\_g}$ denotes the g-axis voltage component of the reference voltage in the *gh* coordinate system, and $u_{ref\_h}$ denotes the *h*-axis voltage component of the reference voltage in the *gh* coordinate system. $T_s$ denotes the switch actuation duration of each of the power switch devices. $V_{0\_r}$ denotes the zero-sequence reference voltage. $V_{dc}$ denotes the voltage across the DC side capacitor in the inverter circuit. $i_{sa}$, $i_{sb}$, and $i_{sc}$ denote currents of branches to which three phases filter inductors are connected, respectively, and positive directions of $i_{sa}$, $i_{sb}$ and $i_{sc}$ are all defined as directions pointing to the inverter.

In an embodiment, the computer program, when executed by the processor, causes the processor to perform the following steps.

The three phases harmonic currents to be compensated at the moment t and the three phases harmonic voltages to be compensated at the moment t are obtained by the following equations:

$$i_{aN}^* = i_a - i_{a1} \ , \ i_{bN}^* = i_b - i_{b1} \ , \ i_{cN}^* = i_c - i_{c1} \ ; \ u_{ac} = u_a - u_a^+ \ , \ u_{bc} = u_b - u_b^+ \ , \ u_{cc} = u_c - u_c^+$$

Where, $i_{aN}^*$, $i_{bN}^*$, and $i_{cN}^*$ denote the three phases harmonic currents to be compensated at the moment $t$, respectively. $i_a$, $i_b$, and $i_c$ denote the three phases currents of the phase-lock loop at the moment $t$, respectively. $i_{a1}$, $t_{b1}$, and $i_{c1}$ denote the three phases fundamental positive-sequence currents of the phase-lock loop at the moment $t$, respectively. $u_{ac}$, $u_{bc}$, and $u_{cc}$ denote the three phases harmonic voltages to be compensated at the moment $t$, respectively. $u_a^+$, $u_b^+$, and $u_c^+$ denote the three phases voltage positive-sequence components in the power grid at the moment $t$, respectively. $u_a$, $u_b$, $u_c$ denote the three phases power supply voltages in the power grid at the moment t, respectively.

In an embodiment, the computer program, when executed by the processor, causes the processor to perform the following steps.

$i_{a1}$, $i_{b1}$, and $i_{c1}$ denote the three phases fundamental positive-sequence currents of the phase-lock loop at the moment $t$, respectively, and are obtained by following equations:

$$\begin{cases} i_{a1} = i_{a1P} + i_{a1Q} \\ i_{b1} = i_{b1P} + i_{b1Q} \\ i_{c1} = i_{c1P} + i_{c1Q} \end{cases},$$

$$\begin{cases} i_{a1Q} = G_Q e_a = I_{1amp} \sin \varphi_{1a} \cos \omega t \\ i_{b1Q} = G_Q e_b = I_{1amp} \sin \varphi_{1a} \cos(\omega t - 120°) \\ i_{c1Q} = G_Q e_c = I_{1amp} \sin \varphi_{1a} \cos(\omega t + 120°) \end{cases},$$

and

$$\begin{cases} i_{a1P} = G_P e_a = I_{1amp} \cos \varphi_{1a} \sin \omega t \\ i_{b1P} = G_P e_b = I_{1amp} \cos \varphi_{1a} \sin(\omega t - 120°) \\ i_{c1P} = G_P e_c = I_{1amp} \cos \varphi_{1a} \sin(\omega t + 120°) \end{cases}$$

Where, $i_{a1P}$, $i_{b1P}$, and $i_{c1P}$ denote the three phases fundamental positive-sequence active current components at the moment $t$, respectively. $i_{a1Q}$, $i_{b1Q}$, and $i_{c1Q}$ denote the three phases fundamental positive-sequence reactive current components at the moment $t$, respectively. $G_P$ denotes the active conductance DC component obtained by performing the low-pass filtering on the three-phase active conductance component of the phase-lock loop at the moment $t$. $G_Q$ denotes the reactive conductance DC component obtained by performing the low-pass filtering on the three-phase reactive conductance component of the phase-lock loop at the moment $t$. $e_a$, $e_b$, and $e_c$ denote the three phases reference voltages of the phase-lock loop at the moment $t$, respectively. $I_{1amp}$ denotes the positive-sequence current amplitude of the phase-lock loop. $\varphi_{1a}$ denotes the angle between the $a$-phase voltage and the $a$-phase fundamental positive-sequence current. $\omega$ denotes an angular frequency of the power grid, and $\omega t$ denotes a changing phase angle of the power grid at the moment $t$.

In an embodiment, the computer program, when executed by the processor, causes the processor to perform the following steps.

A Fourier transform processing is performed on the adjusted harmonic current and the adjusted harmonic voltage, to calculate a total harmonic distortion of a current and a voltage at a power grid side.

It is determined whether the total harmonic distortion satisfies a preset distortion threshold or not.

If yes, the object power quality level is determined according to the total harmonic distortion.

If not, $t+l\Delta t$ is used as a new $t$, $l+1$ is used as a new $l$, and the step of calculating the total harmonic distortion of the current and the voltage at the power grid side is performed continuously until the object power quality level is obtained. Where $l$ is an integer greater than or equal to 0, $l = 0,1,2,3$ and the like, $l$ denotes the number of recalculations for the total harmonic distortion, and an initial value of $l$ is 0, and $\Delta t$ denotes a preset time interval.

In an embodiment, the computer program, when executed by the processor, causes the processor to perform the following steps.

The calculating a total harmonic distortion of a current and a voltage at a power grid side includes obtaining the harmonic distortion of the current and the harmonic distortion of the voltage by the following equations:

$$THD_I = \frac{\sqrt{\sum_{k=2}^{n} I_k^2}}{I_1} \times 100\% \; , \quad THD_U = \frac{\sqrt{\sum_{k=2}^{n} U_k^2}}{U_1} \times 100\%$$

Where, $THD_I$ denotes the harmonic distortion of the current, $I_k$ denotes an effective value of a k-order harmonic current, $I_1$ denotes an effective value of a fundamental current, $THD_U$ denotes the harmonic distortion of the voltage, $U_k$ denotes an effective value of a k-order harmonic voltage, and $U_1$ denotes an effective value of a fundamental voltage.

It should be noted that, the process of executing the computer program by the processor in the embodiment of the present application is consistent with the execution process of each step in the above method, and for details, reference may be made to the above description.

Those of ordinary skill in the art may understand that all or part of the processes in the methods of the above embodiments may be implemented by instructing relevant hardware through a computer program. The computer program may be stored in a non-transitory computer-readable storage medium. When the computer program is executed, the processes of the above-mentioned method embodiments may be included. Any reference to the memory, the storage, the database or other media used in the various embodiments provided by this application may include at least one of the non-transitory memory and the transitory memory. The non-transitory memory may include read-only memory (ROM), magnetic tape, floppy disk, flash memory, or optical memory, and the like. The non-transitory memory may include random access memory (RAM) or external cache memory. As illustration but not limitation, the RAM may be in various forms, such as static random-access memory (SRAM), or dynamic random access memory (DRAM), etc.

The above embodiments are only several embodiments of the present application, and the description thereof is specific and detailed, but should not be understood to limit the scope of the invention. It should be noted that for those skilled in the art, several modifications and improvements may be made without departing from the concept of the present application, as long as they do not depart from the claimed scope. Therefore, the protection scope of the present invention shall be subject to the appended claims.

**Claims**

1.  A power quality level determining method for a power grid, **characterized by** comprising:

    obtaining a harmonic current to be compensated and a harmonic voltage to be compensated in a power grid;
    performing a current adjustment processing on the harmonic current to be compensated according to a compared result of the harmonic current to be compensated and an actual compensating current, to obtain an adjusted harmonic current, wherein, the actual compensating current comprises an actual output current of a current adjusting inverter;
    performing a voltage adjustment processing on a harmonic voltage to be compensated according to the harmonic voltage to be compensated and a pre-obtained object switch actuation duration, to obtain an adjusted harmonic voltage, wherein, the object switch actuation duration comprises a duration when a plurality of groups of power switch devices in an active power filter are controlled to be turned on or off; and
    determining an object power quality level for the power grid according to the adjusted harmonic current and the adjusted harmonic voltage;
    wherein the determining the object power quality level for the power grid according to the adjusted harmonic current and the adjusted harmonic voltage comprises:

    performing a Fourier transform processing on the adjusted harmonic current and the adjusted harmonic voltage, to calculate a total harmonic distortion of a current and a voltage at a power grid side;
    determining whether the total harmonic distortion satisfies a preset distortion threshold or not;
    if yes, determining an object power quality level according to the total harmonic distortion;
    if not, using $t+\Delta t$ as a new $t$, using $l+1$ as a new $l$, and continuously performing a step of calculating the total harmonic distortion of the current and the voltage at the power grid side, until the object power quality level is obtained, wherein $l$ is an integer greater than or equal to 0, $l = 0,1,2,3$ and the like, $l$ denotes the number of recalculations for the total harmonic distortion, and an initial value of $l$ is 0, and $\Delta t$ denotes a preset time interval.

2. The method according to claim 1, wherein the performing the current adjustment processing on the harmonic current to be compensated according to the compared result of the harmonic current to be compensated and the actual compensating current, to obtain the adjusted harmonic current, comprising:

judging whether the harmonic current to be compensated is greater than the actual compensating current, and whether a current difference between the harmonic current to be compensated and the actual compensating current is greater than or equal to a preset current threshold;
if the harmonic current to be compensated is greater than the actual compensating current, and if the current difference is greater than or equal to the preset current threshold, controlling the actual compensating current to be increased based on a PWM signal, and finally outputting a first adjusted harmonic current;
if the harmonic current to be compensated is less than or equal to the actual compensating current, and if the current difference is less than the preset current threshold, controlling the actual compensating current to be decreased based on the PWM signal, and finally outputting a second adjusted harmonic current;
wherein, the first adjusted harmonic current comprises a current outputted when the harmonic current to be compensated is adjusted to increase to a first preset current threshold, the PWM signal comprises a signal generated by a hysteresis comparator after the harmonic current to be compensated and the actual compensating current are inputted into the hysteresis comparator, and the second adjusted harmonic current comprises a current outputted when the harmonic current to be compensated is adjusted to decrease to a second preset current threshold.

3. The method according to claim 2, wherein:

the first adjusted harmonic current comprises a result obtained by using $i^* + \int_0^t \left( V_{dc} / L_s \right) dt$, and the second adjusted harmonic current comprises a result obtained by using $i^* - \int_0^t \left( V_{dc} / L_s \right) dt$;

i* denotes a compensating current used at the moment of switching a hysteresis control, $V_{dc}$ denotes a voltage across a DC side capacitor in an inverter circuit, and $L_s$ denotes a filter inductance used for compensating the harmonic current.

4. The method according to claim 1, wherein, the performing the voltage adjustment processing on the harmonic voltage to be compensated according to the harmonic voltage to be compensated and the pre-obtained object switch actuation duration to obtain the adjusted harmonic voltage, comprises:

dividing a vector space formed by a *gh* coordinate system into sector regions by taking 0 degree as a starting point and at an interval of a set angle, to obtain a plurality of sector regions;
obtaining a sector region switch actuation duration of each sector region, and selecting one sector region switch actuation duration from a plurality of obtained sector regions switch actuation durations to act as an object switch actuation duration, wherein, the sector region switch actuation duration is configured to characterize a switch actuation duration of a power device in the inverter in a corresponding sector region;
inputting the harmonic voltage to be compensated into a preset harmonic voltage adjusting circuit, and using an output voltage of the harmonic voltage adjusting model circuit as an adjusted harmonic voltage, wherein, the harmonic voltage adjusting circuit comprises a plurality of groups of power switch devices and load elements which are connected in a preset connection manner, and the plurality of groups of power switch devices are turned on or off according to the object switch actuation duration.

5. The method according to claim 4, wherein the obtaining the sector region switch actuation duration of each sector region comprises calculating switch actuation durations of a sector region I through a sector region VI by equations:

$$\text{I} \begin{cases} T_a = \dfrac{1}{3}\left(3 - 2u_{ref\_g} - u_{ref\_h}\right)T_s - 2\dfrac{V_{0\_r}}{V_{dc}} \cdot T_s \\[2mm] T_b = \dfrac{1}{3}\left(3 + u_{ref\_g} - u_{ref\_h}\right)T_s - 2\dfrac{V_{0\_r}}{V_{dc}} \cdot T_s \quad (i_{sb} > 0) \\[2mm] T_b = \dfrac{1}{3}\left(3 - u_{ref\_g} + u_{ref\_h}\right)T_s + 2\dfrac{V_{0\_r}}{V_{dc}} \cdot T_s \quad (i_{sb} < 0) \\[2mm] T_c = \dfrac{1}{3}\left(3 - u_{ref\_g} - 2u_{ref\_h}\right)T_s + 2\dfrac{V_{0\_r}}{V_{dc}} \cdot T_s \end{cases},$$

$$\text{II} \begin{cases} T_a = \dfrac{1}{3}\left(3 - u_{ref\_g} + u_{ref\_h}\right)T_s - 2\dfrac{V_{0\_r}}{V_{dc}} \cdot T_s \quad (i_{sa} > 0) \\[2mm] T_a = \dfrac{1}{3}\left(3 + u_{ref\_g} - u_{ref\_h}\right)T_s + 2\dfrac{V_{0\_r}}{V_{dc}} \cdot T_s \quad (i_{sa} < 0) \\[2mm] T_b = \dfrac{1}{3}\left(3 - u_{ref\_g} - 2u_{ref\_h}\right)T_s - 2\dfrac{V_{0\_r}}{V_{dc}} \cdot T_s \\[2mm] T_c = \dfrac{1}{3}\left(3 - 2u_{ref\_g} - u_{ref\_h}\right)T_s + 2\dfrac{V_{0\_r}}{V_{dc}} \cdot T_s \end{cases}$$

$$\text{III} \begin{cases} T_a = \dfrac{1}{3}\left(3 - u_{ref\_g} - 2u_{ref\_h}\right)T_s + 2\dfrac{V_{0\_r}}{V_{dc}} \cdot T_s \\[2mm] T_b = \dfrac{1}{3}\left(3 - 2u_{ref\_g} - u_{ref\_h}\right)T_s - 2\dfrac{V_{0\_r}}{V_{dc}} \cdot T_s \\[2mm] T_c = \dfrac{1}{3}\left(3 + u_{ref\_g} - u_{ref\_h}\right)T_s - 2\dfrac{V_{0\_r}}{V_{dc}} \cdot T_s \quad (i_{sc} > 0) \\[2mm] T_c = \dfrac{1}{3}\left(3 - u_{ref\_g} + u_{ref\_h}\right)T_s + 2\dfrac{V_{0\_r}}{V_{dc}} \cdot T_s \quad (i_{sc} < 0) \end{cases},$$

$$\text{IV} \begin{cases} T_a = \dfrac{1}{3}\left(3 - 2u_{ref\_g} - u_{ref\_h}\right)T_s + 2\dfrac{V_{0\_r}}{V_{dc}} \cdot T_s \\[2mm] T_b = \dfrac{1}{3}\left(3 - u_{ref\_g} + u_{ref\_h}\right)T_s - 2\dfrac{V_{0\_r}}{V_{dc}} \cdot T_s \quad (i_{sb} > 0) \\[2mm] T_b = \dfrac{1}{3}\left(3 + u_{ref\_g} - u_{ref\_h}\right)T_s + 2\dfrac{V_{0\_r}}{V_{dc}} \cdot T_s \quad (i_{sb} < 0) \\[2mm] T_c = \dfrac{1}{3}\left(3 - u_{ref\_g} - 2u_{ref\_h}\right)T_s - 2\dfrac{V_{0\_r}}{V_{dc}} \cdot T_s \end{cases}$$

$$V \begin{cases} T_a = \dfrac{1}{3}\left(3 + u_{ref\_g} - u_{ref\_h}\right)T_s - 2\dfrac{V_{0\_r}}{V_{dc}}\cdot T_s \quad (i_{sa} > 0) \\[3mm] T_a = \dfrac{1}{3}\left(3 - u_{ref\_g} + u_{ref\_h}\right)T_s + 2\dfrac{V_{0\_r}}{V_{dc}}\cdot T_s \quad (i_{sa} < 0) \\[3mm] T_b = \dfrac{1}{3}\left(3 - u_{ref\_g} - 2u_{ref\_h}\right)T_s + 2\dfrac{V_{0\_r}}{V_{dc}}\cdot T_s \\[3mm] T_c = \dfrac{1}{3}\left(3 - 2u_{ref\_g} - u_{ref\_h}\right)T_s - 2\dfrac{V_{0\_r}}{V_{dc}}\cdot T_s \end{cases} ,$$

$$VI \begin{cases} T_a = \dfrac{1}{3}\left(3 - u_{ref\_g} - 2u_{ref\_h}\right)T_s - 2\dfrac{V_{0\_r}}{V_{dc}}\cdot T_s \\[3mm] T_b = \dfrac{1}{3}\left(3 - 2u_{ref\_g} - u_{ref\_h}\right)T_s + 2\dfrac{V_{0\_r}}{V_{dc}}\cdot T_s \\[3mm] T_c = \dfrac{1}{3}\left(3 - u_{ref\_g} + u_{ref\_h}\right)T_s - 2\dfrac{V_{0\_r}}{V_{dc}}\cdot T_s \quad (i_{sc} > 0) \\[3mm] T_c = \dfrac{1}{3}\left(3 + u_{ref\_g} - u_{ref\_h}\right)T_s + 2\dfrac{V_{0\_r}}{V_{dc}}\cdot T_s \quad (i_{sc} < 0) \end{cases} ,$$

wherein, $T_a$, $T_b$, and $T_c$ denote three phases switch actuation durations of a corresponding sector region; $u_{ref\_g}$ denotes a g-axis voltage component of a reference voltage in the *gh* coordinate system, and $u_{ref\_h}$ denotes an *h*-axis voltage component of the reference voltage in the *gh* coordinate system; $T_s$ denotes the switch actuation duration of each of the power switch devices; $V_{0\_r}$ denotes a zero-sequence reference voltage. $V_{dc}$ denotes a voltage across a DC side capacitor in an inverter circuit; $i_{sa}$, $i_{sb}$, and $i_{sc}$ denote currents of branches to which three phases filter inductors are connected, respectively, and positive directions of $i_{sa}$, $i_{sb}$ and $i_{sc}$ are all defined as directions pointing to the inverter.

6. The method according to claim 1, wherein the obtaining the harmonic current to be compensated and the harmonic voltage to be compensated in the power grid comprises: obtaining three phases harmonic currents to be compensated at a moment *t* and three phases harmonic voltages to be compensated at the moment *t* by using equations:

$$i_{aN}^* = i_a - i_{a1} \ , \quad i_{bN}^* = i_b - i_{b1} \ , \quad i_{cN}^* = i_c - i_{c1} \ ; \quad u_{ac} = u_a - u_a^+ \ , \quad u_{bc} = u_b - u_b^+ \ , \quad u_{cc} = u_c - u_c^+$$

wherein, $i_{aN}^*$, $i_{bN}^*$, and $i_{cN}^*$ denote the three phases harmonic currents to be compensated at the moment *t*, respectively; $i_a$, $i_b$, and $i_c$ denote three phases currents of a phase-lock loop at the moment *t*, respectively; $i_{a1}$, $i_{b1}$, and $i_{c1}$ denote three phases fundamental positive-sequence currents of the phase-lock loop at the moment *t*, respectively; $u_{ac}$, $u_{bc}$, and $u_{cc}$, denote three phases harmonic voltages to be compensated at the moment *t*, respectively; $u_a^+$, $u_b^+$, and $u_c^+$ denote three phases voltage positive-sequence components in the power grid at the moment *t*, respectively; and $u_a$, $u_b$, $u_c$ denote three phases power supply voltages in the power grid at the moment *t*, respectively.

7. The method according to claim 6, wherein, $i_{a1}$, $i_{b1}$, and $i_{c1}$ denote three phases fundamental positive-sequence currents of the phase-lock loop at the moment *t*, respectively, and are obtained by equations:

$$\begin{cases} i_{a1} = i_{a1P} + i_{a1Q} \\ i_{b1} = i_{b1P} + i_{b1Q} \\ i_{c1} = i_{c1P} + i_{c1Q} \end{cases} ,$$

$$
\begin{cases}
i_{a1Q} = G_Q e_a = I_{1amp} \sin \varphi_{1a} \cos \omega t \\
i_{b1Q} = G_Q e_b = I_{1amp} \sin \varphi_{1a} \cos(\omega t - 120°) \\
i_{c1Q} = G_Q e_c = I_{1amp} \sin \varphi_{1a} \cos(\omega t + 120°)
\end{cases} ,
$$

$$
\begin{cases}
i_{a1P} = G_P e_a = I_{1amp} \cos \varphi_{1a} \sin \omega t \\
i_{b1P} = G_P e_b = I_{1amp} \cos \varphi_{1a} \sin(\omega t - 120°) \\
i_{c1P} = G_P e_c = I_{1amp} \cos \varphi_{1a} \sin(\omega t + 120°)
\end{cases}
$$

wherein, $i_{a1P}$, $i_{b1P}$, and $i_{c1P}$ denote three phases fundamental positive-sequence active current components at the moment $t$, respectively; $i_{a1Q}$, $i_{b1Q}$, and $i_{c1Q}$ denote three phases fundamental positive-sequence reactive current components at the moment $t$, respectively; $G_P$ denotes an active conductance DC component obtained by performing a low-pass filtering on a three-phase active conductance component of the phase-lock loop at the moment $t$; $G_Q$ denotes a reactive conductance DC component obtained by performing the low-pass filtering on a three-phase reactive conductance component of the phase-lock loop at the moment $t$; $e_a$, $e_b$, and $e_c$ denote three phases reference voltages of the phase-lock loop at the moment $t$, respectively; $I_{1amp}$ denotes a positive-sequence current amplitude of the phase-lock loop; $\varphi_{1a}$ denotes an angle between an $a$-phase voltage and an $a$-phase fundamental positive-sequence current; $\omega$ denotes an angular frequency of the power grid, and $\omega t$ denotes a changing phase angle of the power grid at the moment $t$.

8. The method according to claim 1, wherein, the calculating the total harmonic distortion of the current and the voltage at a power grid side comprises calculating a harmonic distortion of the current and a harmonic distortion of the voltage by equations:

$$
THD_I = \frac{\sqrt{\sum_{k=2}^{n} I_k^2}}{I_1} \times 100\% , \quad THD_U = \frac{\sqrt{\sum_{k=2}^{n} U_k^2}}{U_1} \times 100\%
$$

wherein, $THD_I$ denotes the harmonic distortion of the current, $I_k$ denotes an effective value of a k-order harmonic current, $I_1$ denotes an effective value of a fundamental current, $THD_U$ denotes the harmonic distortion of the voltage, $U_k$ denotes an effective value of a $k$-order harmonic voltage, and $U_1$ denotes an effective value of a fundamental voltage.

9. A power quality level determining apparatus for a power grid, **characterized by** comprising:

an acquiring module (11), configured to obtain a harmonic current to be compensated and a harmonic voltage to be compensated in a power grid;
a first adjusting module (12), configured to perform a current adjustment processing on the harmonic current to be compensated according to a compared result of the harmonic current to be compensated and an actual compensating current, to obtain an adjusted harmonic current, wherein, the actual compensating current comprises an actual output current of a current adjusting inverter;
a second adjusting module (13), configured to perform a voltage adjustment processing on a harmonic voltage to be compensated according to the harmonic voltage to be compensated and a pre-obtained object switch actuation duration, to obtain an adjusted harmonic voltage, wherein, the object switch actuation duration comprises a duration when a plurality of groups of power switch devices in an active power filter are controlled to be turned on or off;
a determining module (14), configured to determine an object power quality level for the power grid according to the adjusted harmonic current and the adjusted harmonic voltage;
wherein the determining module is further configured to:

perform a Fourier transform processing on the adjusted harmonic current and the adjusted harmonic voltage, to calculate a total harmonic distortion of a current and a voltage at a power grid side;
determine whether the total harmonic distortion satisfies a preset distortion threshold or not;

if yes, determine an object power quality level according to the total harmonic distortion;

if not, use $t+l\Delta t$ as a new $t$, use $l+1$ as a new $l$, and continuously perform a step of calculating the total harmonic distortion of the current and the voltage at the power grid side, until the object power quality level is obtained, wherein $l$ is an integer greater than or equal to 0, $l = 0,1,2,3$ and the like, $l$ denotes the number of recalculations for the total harmonic distortion, and an initial value of $l$ is 0, and $\Delta t$ denotes a preset time interval .


**Patentansprüche**

1. Verfahren zur Bestimmung des Netzqualitätsniveaus in einem Stromnetz, **dadurch gekennzeichnet, dass** es Folgendes umfasst:

   Erhalten eines zu kompensierenden Oberwellenstroms und einer zu kompensierenden Oberwellenspannung in einem Stromnetz;

   Durchführen einer Stromanpassungsverarbeitung am zu kompensierenden Oberwellenstrom gemäß einem Vergleichsergebnis des zu kompensierenden Oberwellenstroms und eines tatsächlichen Kompensationsstroms, um einen angepassten Oberwellenstrom zu erhalten, wobei der tatsächliche Kompensationsstrom einen tatsächlichen Ausgangsstrom eines Stromanpassungswechselrichters umfasst;

   Durchführen einer Spannungsanpassungsverarbeitung an einer zu kompensierenden Oberwellenspannung gemäß der zu kompensierenden Oberwellenspannung und einer zuvor erhaltenen Objekt-Schalterbetätigungsdauer, um eine angepasste Oberwellenspannung zu erhalten, wobei die Objekt-Schalterbetätigungsdauer eine Dauer umfasst, in der eine Vielzahl von Gruppen von Leistungsschaltervorrichtungen in einem aktiven Leistungsfilter so gesteuert werden, dass sie ein- oder ausgeschaltet werden; und

   Bestimmen eines Objekt-Netzqualitätsniveaus für das Stromnetz gemäß dem angepassten Oberwellenstrom und der angepassten Oberwellenspannung;

   wobei das Bestimmen des Objekt-Netzqualitätsniveaus für das Stromnetz gemäß dem angepassten Oberwellenstrom und der angepassten Oberwellenspannung Folgendes umfasst:

   Durchführen einer Fourier-Transformationsverarbeitung des angepassten Oberwellenstroms und der angepassten Oberwellenspannung, um eine gesamte harmonische Verzerrung von Strom und Spannung auf der Netzseite zu berechnen;

   Bestimmen, ob die gesamte harmonische Verzerrung einen voreingestellten Verzerrungsschwellenwert einhält oder nicht;

   falls ja, Bestimmen des Objekt-Netzqualitätsniveaus gemäß der gesamten harmonischen Verzerrung;

   andernfalls, Verwenden von $t + l\Delta t$ als neues $t$ unter Verwendung von $l + 1$ als neues $l$ und kontinuierliches Durchführen eines Schritts des Berechnens der gesamten harmonischen Verzerrung des Stroms und der Spannung auf der Netzseite, bis das Objekt-Netzqualitätsniveau erhalten wird, wobei $l$ eine ganze Zahl größer oder gleich 0 ist, $l = 0,1,2,3$ und dergleichen, $l$ die Anzahl der Neuberechnungen für die gesamte harmonische Verzerrung bezeichnet und ein Anfangswert von $l$ 0 ist und $\Delta t$ ein voreingestelltes Zeitintervall bezeichnet.

2. Verfahren nach Anspruch 1, wobei das Durchführen der Stromanpassungsverarbeitung des zu kompensierenden Oberwellenstroms gemäß dem Vergleichsergebnis des zu kompensierenden Oberwellenstroms und des tatsächlichen Kompensationsstroms, um den angepassten Oberwellenstrom zu erhalten, umfasst:

   Beurteilen, ob der zu kompensierende Oberwellenstrom größer ist als der tatsächliche Kompensationsstrom und ob eine Stromdifferenz zwischen dem zu kompensierenden Oberwellenstrom und dem tatsächlichen Kompensationsstrom größer oder gleich einem voreingestellten Stromschwellenwert ist;

   wenn der zu kompensierende Oberwellenstrom größer ist als der tatsächliche Kompensationsstrom und wenn die Stromdifferenz größer oder gleich dem voreingestellten Stromschwellenwert ist, Steuern des tatsächlichen Kompensationsstroms so, dass er auf der Grundlage eines PWM-Signals erhöht wird, und schließlich Ausgeben eines ersten angepassten Oberwellenstroms;

   wenn der zu kompensierende Oberwellenstrom kleiner oder gleich dem tatsächlichen Kompensationsstrom ist und wenn die Stromdifferenz kleiner als der voreingestellte Stromschwellenwert ist, Steuern des tatsächlichen Kompensationsstroms so, dass er auf der Grundlage des PWM-Signals verringert wird, und schließlich Ausgeben eines zweiten angepassten Oberwellenstroms;

   wobei der erste angepasste Oberwellenstrom einen Strom umfasst, der ausgegeben wird, wenn der zu kompensierende Oberwellenstrom angepasst wird, um auf einen ersten voreingestellten Stromschwellenwert erhöht zu werden, das PWM-Signal ein Signal umfasst, das von einem Hysteresekomparator erzeugt wird, nachdem der zu kompensierende Oberwellenstrom und der tatsächliche Kompensationsstrom in den Hysteresekomparator eingegeben wurden, und der zweite angepasste Oberwellenstrom einen Strom umfasst, der ausgegeben wird, wenn der zu kompensierende Oberwellenstrom angepasst wird, um auf einen zweiten voreingestellten Stromschwellenwert verringert zu werden.

3. Verfahren nach Anspruch 2, wobei

der erste angepasste Oberwellenstrom ein Ergebnis umfasst, das durch Verwendung von $i^* + \int_0^t (V_{dc}/L_s)dt$ erhalten wurde, und der zweite angepasste Oberwellenstrom ein Ergebnis umfasst, das durch Verwendung von $i^* - \int_0^t (V_{dc}/L_s)dt$ erhalten wurde;

i* bezeichnet einen Kompensationsstrom, der zum Zeitpunkt des Schaltens einer Hysteresesteuerung verwendet wird, $V_{dc}$ bezeichnet eine Spannung an einem DC-seitigen Kondensator in einem Wechselrichterkreis und $L_s$ bezeichnet eine Filterinduktivität, die zur Kompensation des Oberwellenstroms verwendet wird.

4. Verfahren nach Anspruch 1, wobei das Durchführen der Spannungsanpassungsverarbeitung der zu kompensierenden Oberwellenspannung gemäß der zu kompensierenden Oberwellenspannung und der zuvor erhaltenen Objekt-Schalterbetätigungsdauer zum Erhalten der angepassten Oberwellenspannung umfasst:

Unterteilen eines durch ein *gh* Koordinatensystem gebildeten Vektorraums in Sektorbereiche, indem 0 Grad als Ausgangspunkt gewählt wird, und in einem Intervall eines festgelegten Winkels, um eine Vielzahl von Sektorbereiche zu erhalten;

Erhalten einer Sektorbereich-Schalterbetätigungsdauer jedes Sektorbereichs und Auswählen einer Sektorbereich-Schalterbetätigungsdauer aus einer Vielzahl erhaltener Sektorbereich-Schalterbetätigungsdauern, die als Objekt-Schalterbetätigungsdauer dienen soll, wobei die Sektorbereich-Schalterbetätigungsdauer so konfiguriert ist, dass sie eine Schalterbetätigungsdauer einer Leistungsvorrichtung im Wechselrichter in einem entsprechenden Sektorbereich charakterisiert;

Eingeben der zu kompensierenden Oberwellenspannung in einen voreingestellten Oberwellenspannung-Anpassungskreis, und Verwenden einer Ausgangsspannung des Oberwellenspannung-Anpassungsmodellkreises als angepasste Oberwellenspannung, wobei der Oberwellenspannung-Anpassungskreis eine Vielzahl von Gruppen von Leistungsschaltervorrichtungen und Lastelementen umfasst, die in einer voreingestellten Weise verbunden sind, und die Vielzahl von Gruppen von Leistungsschaltervorrichtungen gemäß der Objekt-Schalterbetätigungsdauer ein- oder ausgeschaltet werden.

5. Verfahren nach Anspruch 4, wobei das Erhalten der Sektorbereich-Schalterbetätigungsdauer jedes Sektorbereichs das Berechnen von Schalterbetätigungsdauern eines Sektorbereich I bis hin zu einem Sektorbereich VI mittels folgender Gleichungen umfasst:

$$I\begin{cases} T_a = \frac{1}{3}\left(3 - 2u_{r_{ref\_g}} - u_{ref\_H}\right)T_s - 2\frac{V_{0\_r}}{V_{dc}} \cdot T_s \\ T_b = \frac{1}{3}\left(3 + u_{ref\_g} - u_{ref\_h}\right)T_s - 2\frac{V_{0\_r}}{V_{dc}} \cdot T_s(i_{sb} > 0) \\ T_b = \frac{1}{3}\left(3 - u_{ref\_g} + u_{ref\_h}\right)T_s + 2\frac{V_{0\_r}}{V_{dc}} \cdot T_s(i_{sb} < 0) \\ T_c = \frac{1}{3}\left(3 - u_{ref\_g} - 2u_{ref\_h}\right)T_s + 2\frac{V_{0\_r}}{V_{dc}} \cdot T_s \end{cases}$$

$$II\begin{cases} T_a = \frac{1}{3}\left(3 - u_{ref\_g} + u_{ref\_h}\right)T_s - 2\frac{V_{0\_r}}{V_{dc}} \cdot T_s(i_{sa} > 0) \\ T_a = \frac{1}{3}\left(3 + u_{ref\_g} - u_{ref\_h}\right)T_s + 2\frac{V_{0\_r}}{V_{dc}} \cdot T_s(i_{sa} < 0) \\ T_b = \frac{1}{3}\left(3 - u_{ref\_g} - 2u_{ref\_h}\right)T_s - 2\frac{V_{0\_r}}{V_{dc}} \cdot T_s \\ T_c = \frac{1}{3}\left(3 - 2u_{ref\_g} - u_{ref\_h}\right)T_s + 2\frac{V_{0\_r}}{V_{dc}} \cdot T_s \end{cases}$$

$$III\begin{cases} T_a = \frac{1}{3}\left(3 - u_{ref\_g} - 2u_{ref\_h}\right)T_s + 2\frac{V_{0\_r}}{V_{dc}}\cdot T_s \\ T_b = \frac{1}{3}\left(3 - 2u_{ref\_g} - u_{ref\_h}\right)T_s - 2\frac{V_{0\_r}}{V_{dc}}\cdot T_s \\ T_c = \frac{1}{3}\left(3 + u_{ref\_g} - u_{ref\_h}\right)T_s - 2\frac{V_{0\_r}}{V_{dc}}\cdot T_s\,(i_{sc} > 0)' \\ T_c = \frac{1}{3}\left(3 - u_{ref\_g} + u_{ref\_h}\right)T_s + 2\frac{V_{0\_r}}{V_{dc}}\cdot T_s\,(i_{sc} < 0) \end{cases}$$

$$IV\begin{cases} T_a = \frac{1}{3}\left(3 - 2u_{ref\_g} - u_{ref-h}\right)T_s + 2\frac{V_{0\_r}}{V_{dc}}\cdot T_s \\ T_b = \frac{1}{3}\left(3 - u_{ref\_g} + u_{ref\_h}\right)T_s - 2\frac{V_{0\_r}}{V_{dc}}\cdot T_s\,(i_{sb} > 0) \\ T_b = \frac{1}{3}\left(3 + u_{ref\_g} - u_{ref\_h}\right)T_s + 2\frac{V_{0\_r}}{V_{dc}}\cdot T_s\,(i_{sb} < 0) \\ T_c = \frac{1}{3}\left(3 - u_{ref\_g} - 2u_{ref\_h}\right)T_s - 2\frac{V_{0\_r}}{V_{dc}}\cdot T_s \end{cases}$$

$$V\begin{cases} T_a = \frac{1}{3}\left(3 + u_{ref\_g} - u_{ref\_h}\right)T_s - 2\frac{V_{0\_r}}{V_{dc}}\cdot T_s\,(i_{sa} > 0) \\ T_a = \frac{1}{3}\left(3 - u_{ref\_g} + u_{ref\_h}\right)T_s + 2\frac{V_{0\_r}}{V_{dc}}\cdot T_s\,(i_{sa} < 0) \\ T_b = \frac{1}{3}\left(3 - u_{ref\_g} - 2u_{ref\_h}\right)T_s + 2\frac{V_{0\_r}}{V_{dc}}\cdot T_s \\ T_c = \frac{1}{3}\left(3 - 2u_{ref\_g} - u_{ref\_h}\right)T_s - 2\frac{V_{0\_r}}{V_{dc}}\cdot T_s \end{cases}$$

$$VI\begin{cases} T_c = \frac{1}{3}\left(3 - 2u_{ref\_g} - u_{ref\_h}\right)T_s - 2\frac{V_{0\_r}}{V_{dc}}\cdot T_s \\ T_b = \frac{1}{3}\left(3 - 2u_{ref\_g} - u_{ref\_h}\right)T_s + 2\frac{V_{0\_r}}{V_{dc}}\cdot T_s \\ T_c = \frac{1}{3}\left(3 - u_{ref\_G} + u_{ref\_h}\right)T_s - 2\frac{V_{0\_r}}{V_{dc}}\cdot T_s\,(i_{sc} > 0) \\ T_c = \frac{1}{3}\left(3 + u_{ref\_G} - u_{ref\_h}\right)T_s + 2\frac{V_{0\_r}}{V_{dc}}\cdot T_s\,(i_{sc} < 0) \end{cases}$$

wobei $T_a$, $T_b$ und $T_c$ Dreiphasen-Schalterbetätigungsdauern eines entsprechenden Sektorbereichs bezeichnen; $u_{ref\_g}$ die g-Achsen-Spannungskomponente einer Referenzspannung im gh-Koordinatensystem bezeichnet, und $u_{ref\_h}$ die $h$-Achsen-Spannungskomponente der Referenzspannung im gh-Koordinatensystem bezeichnet; $T_s$ die Schalterbetätigungsdauer jeder der Leistungsschaltervorrichtungen bezeichnet; $V_{0\_r}$ eine Null-Referenzspannung bezeichnet; $V_{0\_r}$ eine Spannung an einem DC-seitigen Kondensator im Wechselrichterkreis bezeichnet; $i_{sa}$, $i_{sb}$ und $i_{sc}$ jeweils die Ströme der Zweige bezeichnen, an die die Induktivitäten des Dreiphasenfilters angeschlossen sind, wobei die positiven Richtungen von $i_{sa}$, $i_{sb}$ und $i_{sc}$ jeweils zum Wechselrichter zeigen.

6. Verfahren nach Anspruch 1, wobei das Erhalten des zu kompensierenden Oberwellenstroms und der zu kompensierenden Oberwellenspannung im Stromnetz Folgendes umfasst: Erhalten der zu kompensierenden Dreiphasen-Oberwellenströme zu einem Zeitpunkt $t$ und der zu kompensierenden Dreiphasen-Oberwellenspannungen zum Zeitpunkt $t$ unter Verwendung der folgenden Gleichungen:

$$i_{aN}^* = i_a - i_{a1}, i_{bN}^* = i_b - i_{b1}, i_{cN}^* = i_c - i_{c1}; u_{aC} = u_a - u_a^+, u_{bc} = u_b - u_b^+, u_{cc}$$
$$= u_c - u_c^+$$

wobei $i_{aN}^*$, $i_{bN}^*$ und $i_{cN}^*$ jeweils die Dreiphasen-Oberwellenströme bezeichnen, die zum Zeitpunkt $t$ kompensiert werden sollen; $i_a$, $i_b$ und $i_c$ jeweils die Dreiphasenströme einer Phasenregelschleife zum Zeitpunkt $t$, bezeichnen; $i_{a1}$, $i_{b1}$ und $i_{c1}$ jeweils Dreiphasen-Mitströme des Grundstroms der Phasenregelschleife zum Zeitpunkt $t$ bezeichnen; $u_{aC}$, $u_{bc}$ und $u_{cc}$ jeweils die Dreiphasen-Oberwellenspannungen bezeichnen, die zum Zeitpunkt $t$ kompensiert werden sollen; $u_a^+$, $u_b^+$ und $u_c^+$ jeweils Dreiphasen-Mitstromkomponenten im Stromnetz zum Zeitpunkt $t$ bezeichnen; und $u_a$, $u_b$, $u_c$ jeweils Dreiphasen-Versorgungsspannungen im Stromnetz zum Zeitpunkt $t$ bezeichnen.

7.  Verfahren nach Anspruch 6, wobei $i_{a1}$, $i_{b1}$ und $i_{c1}$ jeweils Dreiphasen-Mitströme des Grundstroms der Phasenregelschleife zum Zeitpunkt $t$ bezeichnen und durch die folgenden Gleichungen erhalten werden:

$$\begin{cases} i_{a1} = i_{a1P} + i_{a1Q} \\ i_{b1} = i_{b1P} + i_{b1Q} \\ i_{c1} = i_{c1P} + i_{c1Q} \, , \end{cases}$$

$$\begin{cases} i_{a1Q} = G_Q e_a = I_{1amp} \sin \varphi_{1a} \cos \omega t \\ i_{b1Q} = G_Q e_b = I_{1amp} \sin \varphi_{1a} \cos (\omega t - 120°), \\ i_{c1Q} = G_Q e_c = I_{1amp} \sin \varphi_{1a} \cos (\omega t + 120°) \end{cases}$$

$$\begin{cases} i_{a1P} = G_P e_a = I_{1amp} \cos \varphi_{1a} \sin \omega t \\ i_{b1P} = G_P e_b = I_{1amp} \cos \varphi_{1a} \sin (\omega t - 120°) \\ i_{c1P} = G_P e_c = I_{1amp} \cos \varphi_{1a} \sin (\omega t + 120°) \end{cases}$$

wobei $i_{a1P}$, $i_{b1P}$ und $i_{c1P}$ jeweils aktive Komponenten des Dreiphasen-Mitstroms des Grundstroms zum Zeitpunkt $t$ bezeichnen; $i_{a1Q}$, $i_{b1Q}$ und $i_{c1Q}$ jeweils Dreiphasen-Mitstrom-Blindstromkomponenten des Grundstroms zum Zeitpunkt $t$ bezeichnen; $G_P$ eine aktive Leitwert-Gleichstromkomponente bezeichnet, die durch Durchführen einer Tiefpassfilterung einer aktiven Dreiphasen-Leitwertkomponente der Phasenregelschleife zum Zeitpunkt $t$ erhalten wird; $G_Q$ eine Blindleitwert-Gleichstromkomponente bezeichnet, die durch Tiefpassfilterung einer Dreiphasen-Blindleitwertkomponente der Phasenregelschleife zum Zeitpunkt $t$ erhalten wird; $e_a$, $e_b$ und $e_c$ jeweils Dreiphasen-Referenzspannungen der Phasenregelschleife zum Zeitpunkt $t$ bezeichnen; $I_{1amp}$ eine Mitstrom-Stromamplitude der Phasenregelschleife bezeichnet; $\varphi_{1a}$ einen Winkel zwischen einer $\alpha$-Phasenspannung und einem $\alpha$-Phasen-Mitstrom des Grundstroms bezeichnet; $\omega$ eine Kreisfrequenz des Stromnetzes bezeichnet und $\omega t$ einen sich ändernden Phasenwinkel des Stromnetzes zum Zeitpunkt $t$ bezeichnet.

8.  Verfahren nach Anspruch 1, wobei das Berechnen der gesamten harmonischen Verzerrung des Stroms und der Spannung auf einer Netzseite das Berechnen einer harmonischen Verzerrung des Stroms und einer harmonischen Verzerrung der Spannung mittels folgender Gleichungen umfasst:

$$THD_I = \frac{\sqrt{\sum_{k=2}^n I_k^2}}{I_1} \times 100\%, \quad THD_U = \frac{\sqrt{\sum_{k=2}^n U_k^2}}{U_1} \times 100\%$$

wobei $THD_I$ die harmonische Verzerrung des Stroms bezeichnet, $I_k$ den Effektivwert eines harmonischen Stroms $k$-ter Ordnung bezeichnet, $I_1$ den Effektivwert eines Grundstroms bezeichnet, $THD_U$ die harmonische Verzerrung der Spannung bezeichnet, $U_k$ den Effektivwert einer harmonischen Spannung $k$-ter Ordnung bezeichnet und $U_1$ den Effektivwert einer Grundspannung bezeichnet.

9.  Einrichtung zur Bestimmung des Netzqualitätsniveaus in einem Stromnetz, **dadurch gekennzeichnet, dass** sie Folgendes umfasst:

> ein Erfassungsmodul (11), das so konfiguriert ist, dass es einen zu kompensierenden Oberwellenstrom und eine zu kompensierende Oberwellenspannung in einem Stromnetz erfasst;
> ein erstes Einstellmodul (12), das so konfiguriert ist, dass es eine Stromanpassungsverarbeitung des zu kompensierenden Oberwellenstroms gemäß einem Vergleichsergebnis des zu kompensierenden Oberwel-

EP 4 064 496 B1

lenstroms und einem tatsächlichen Kompensationsstrom durchführt, um einen angepassten Oberwellenstrom zu erhalten, wobei der tatsächliche Kompensationsstrom einen tatsächlichen Ausgangsstrom eines Stromanpassungswechselrichters umfasst;

ein zweites Einstellmodul (13), das so konfiguriert ist, dass es eine Spannungsanpassungsverarbeitung an einer zu kompensierenden Oberwellenspannung gemäß der zu kompensierenden Oberwellenspannung und einer zuvor erhaltenen Objekt--Schalterbetätigungsdauer durchführt, um eine angepasste Oberwellenspannung zu erhalten, wobei die Objekt-Schalterbetätigungsdauer eine Dauer umfasst, in der eine Vielzahl von Gruppen von Leistungsschaltervorrichtungen in einem aktiven Leistungsfilter so gesteuert werden, dass sie ein- oder ausgeschaltet werden;

Bestimmungsmodul (14), das so konfiguriert ist, dass es das Objekt-Netzqualitätsniveau für das Stromnetz gemäß dem angepassten Oberwellenstrom und der angepassten Oberwellenspannung bestimmt;

wobei das Bestimmungsmodul weiter konfiguriert ist zum:

Durchführen einer Fourier-Transformationsverarbeitung des angepassten Oberwellenstroms und der angepassten Oberwellenspannung, um eine gesamte harmonische Verzerrung von Strom und Spannung auf der Netzseite zu berechnen;

Bestimmen, ob die gesamte harmonische Verzerrung einen voreingestellten Verzerrungsschwellenwert einhält oder nicht;

falls ja, Bestimmen des Objekt-Netzqualitätsniveaus gemäß der gesamten harmonischen Verzerrung;

andernfalls, Verwenden von $t + l\Delta t$ als neues $t$, Verwenden von $l + 1$ als neues $l$ und kontinuierliches Durchführen eines Schritts des Berechnens der gesamten harmonischen Verzerrung des Stroms und der Spannung auf der Netzseite, bis das Objekt-Netzqualitätsniveau erhalten wird, wobei $l$ eine ganze Zahl größer oder gleich 0 ist, $l$ = 0,1,2,3 und dergleichen, $l$ die Anzahl der Neuberechnungen für die gesamte harmonische Verzerrung bezeichnet und ein Anfangswert von $l$ 0 ist, und $\Delta t$ ein voreingestelltes Zeitintervall bezeichnet.

## Revendications

1. Procédé de détermination de niveau de qualité de puissance d'un réseau électrique, **caractérisé en ce qu'**il comprend :

l'obtention d'un courant harmonique à compenser et d'une tension harmonique à compenser dans un réseau électrique ;

l'exécution d'un traitement d'ajustement de courant sur le courant harmonique à compenser en fonction d'un résultat de comparaison entre le courant harmonique à compenser et un courant de compensation réel, afin d'obtenir un courant harmonique ajusté, dans lequel le courant de compensation réel comprend un courant de sortie réel d'un onduleur d'ajustement de courant ;

l'exécution d'un traitement d'ajustement de tension sur une tension harmonique à compenser en fonction de la tension harmonique à compenser et d'une durée d'actionnement de commutation cible préalablement obtenue, afin d'obtenir une tension harmonique ajustée, dans lequel la durée d'actionnement de commutation cible comprend une durée pendant laquelle une pluralité de groupes de dispositifs de commutation de puissance dans un filtre de puissance actif sont commandés pour être allumés ou éteints ; et

la détermination d'un niveau de qualité de puissance cible pour le réseau électrique en fonction du courant harmonique ajusté et de la tension harmonique ajustée ;

dans lequel la détermination du niveau de qualité de puissance cible pour le réseau électrique en fonction du courant harmonique ajusté et de la tension harmonique ajustée comprend :

l'exécution d'un traitement de transformée de Fourier sur le courant harmonique ajusté et la tension harmonique ajustée, afin de calculer une distorsion harmonique totale d'un courant et d'une tension côté réseau électrique ;

la détermination du fait que la distorsion harmonique totale satisfait ou non à un seuil de distorsion prédéfini ;

si oui, la détermination d'un niveau de qualité de puissance cible en fonction de la distorsion harmonique totale ;

sinon, l'utilisation de $t + l\Delta t$ comme un nouveau $t$, l'utilisation de $l + 1$ comme un nouveau $l$, et l'exécution continue d'une étape de calcul de la distorsion harmonique totale du courant et de la tension côté réseau électrique, jusqu'à ce que le niveau de qualité de puissance cible soit obtenu, dans lequel $l$ est un entier supérieur ou égal à 0, $l$ = 0,1,2,3 et ainsi de suite, $l$ désigne le nombre de recalculs pour la distorsion harmonique totale, et une valeur initiale de *I* est 0, et Δ*t* désigne un intervalle de temps prédéfini.

2. Procédé selon la revendication 1, dans lequel l'exécution du traitement d'ajustement de courant sur le courant harmonique à compenser en fonction du résultat de comparaison entre le courant harmonique à compenser et le courant de compensation réel, afin d'obtenir le courant harmonique ajusté, comprend :

l'évaluation du fait que le courant harmonique à compenser est supérieur ou non au courant de compensation réel, et du fait qu'une différence de courant entre le courant harmonique à compenser et le courant de compensation réel est supérieure ou égale à un seuil de courant prédéfini ;

si le courant harmonique à compenser est supérieur au courant de compensation réel, et si la différence de courant est supérieure ou égale au seuil de courant prédéfini, la commande du courant de compensation réel pour qu'il soit augmenté sur la base d'un signal PWM, et finalement la délivrance en sortie d'un premier courant harmonique ajusté ;

si le courant harmonique à compenser est inférieur ou égal au courant de compensation réel, et si la différence de courant est inférieure au seuil de courant prédéfini, la commande du courant de compensation réel pour qu'il soit diminué sur la base du signal PWM, et finalement la délivrance en sortie d'un second courant harmonique ajusté ;

dans lequel le premier courant harmonique ajusté comprend un courant délivré en sortie lorsque le courant harmonique à compenser est ajusté pour être augmenté jusqu'à un premier seuil de courant prédéfini, le signal PWM comprend un signal généré par un comparateur à hystérésis après que le courant harmonique à compenser et le courant de compensation réel soient entrés dans le comparateur à hystérésis, et le second courant harmonique ajusté comprend un courant délivré en sortie lorsque le courant harmonique à compenser est ajusté pour être diminué jusqu'à un second seuil de courant prédéfini.

3. Procédé selon la revendication 2, dans lequel :

le premier courant harmonique ajusté comprend un résultat obtenu en utilisant $i^* + \int_0^t (V_{dc}/L_s)dt$, et le second courant harmonique ajusté comprend un résultat obtenu en utilisant $i^* - \int_0^t (V_{dc}/L_s)dt$ ;

i* désigne un courant de compensation utilisé à l'instant de la commutation d'une commande à hystérésis, $V_{dc}$ désigne une tension aux bornes d'un condensateur côté CC dans un circuit onduleur, et $L_s$ désigne une inductance de filtre utilisée pour compenser le courant harmonique.

4. Procédé selon la revendication 1, dans lequel l'exécution du traitement d'ajustement de tension sur la tension harmonique à compenser en fonction de la tension harmonique à compenser et de la durée d'actionnement de commutateur cible préalablement obtenue afin d'obtenir la tension harmonique ajustée comprend :

la division d'un espace vectoriel formé par un système de coordonnées *gh* en régions sectorielles en prenant 0 degré comme point de départ et à un intervalle d'un angle défini, pour obtenir une pluralité de régions sectorielles ;

l'obtention d'une durée d'actionnement de commutation de région sectorielle de chaque région sectorielle, et la sélection d'une durée d'actionnement de commutation de région sectorielle parmi une pluralité de durées d'actionnement de commutation de région sectorielles obtenues pour servir de durée d'actionnement de commutation cible, dans lequel la durée d'actionnement de commutation de région sectorielle est configurée pour caractériser une durée d'actionnement de commutation d'un dispositif de puissance dans l'onduleur d'une région sectorielle correspondante ;

l'entrée de la tension harmonique à compenser dans un circuit d'ajustement de tension harmonique prédéfini, et l'utilisation d'une tension de sortie du circuit modèle d'ajustement de tension harmonique comme tension harmonique ajustée, dans lequel le circuit d'ajustement de tension harmonique comprend une pluralité de groupes de dispositifs de commutation de puissance et d'éléments de charge qui sont connectés selon un mode de connexion prédéfini, et la pluralité de groupes de dispositifs de commutation de puissance sont allumés ou éteints en fonction de la durée d'actionnement de commutation cible.

5. Procédé selon la revendication 4, dans lequel l'obtention de la durée d'actionnement de commutation de région sectorielle de chaque région sectorielle comprend le calcul de durées d'actionnement de commutation d'une région sectorielle I à une région sectorielle VI par les équations :

$$I \begin{cases} T_a = \frac{1}{3}\left(3 - 2u_{r_{ref\_g}} - u_{ref\_h}\right)T_s - 2\frac{V_{0\_r}}{V_{dc}}\cdot T_s \\ T_b = \frac{1}{3}\left(3 + u_{ref\_g} - u_{ref\_h}\right)T_s - 2\frac{V_{0\_r}}{V_{dc}}\cdot T_s (i_{sb} > 0) \\ T_b = \frac{1}{3}\left(3 - u_{ref\_g} + u_{ref\_h}\right)T_s + 2\frac{V_{0\_r}}{V_{dc}}\cdot T_s (i_{sb} < 0)' \\ T_c = \frac{1}{3}\left(3 - u_{ref\_g} - 2u_{ref\_h}\right)T_s + 2\frac{V_{0\_r}}{V_{dc}}\cdot T_s \end{cases}$$

$$II \begin{cases} T_a = \frac{1}{3}\left(3 - u_{ref\_g} + u_{ref\_h}\right)T_s - 2\frac{V_{0\_r}}{V_{dc}}\cdot T_s (i_{sa} > 0) \\ T_a = \frac{1}{3}\left(3 + u_{ref\_g} - u_{ref\_h}\right)T_s + 2\frac{V_{0\_r}}{V_{dc}}\cdot T_s (i_{sa} < 0) \\ T_b = \frac{1}{3}\left(3 - u_{ref\_g} - 2u_{ref\_h}\right)T_s - 2\frac{V_{0\_r}}{V_{dc}}\cdot T_s \\ T_c = \frac{1}{3}\left(3 - 2u_{ref\_g} - u_{ref\_h}\right)T_s + 2\frac{V_{0\_r}}{V_{dc}}\cdot T_s \end{cases}$$

$$III \begin{cases} T_a = \frac{1}{3}\left(3 - u_{ref\_g} - 2u_{ref\_h}\right)T_s + 2\frac{V_{0\_r}}{V_{dc}}\cdot T_s \\ T_b = \frac{1}{3}\left(3 - 2u_{ref\_g} - u_{ref\_h}\right)T_s - 2\frac{V_{0\_r}}{V_{dc}}\cdot T_s \\ T_c = \frac{1}{3}\left(3 + u_{ref\_g} - u_{ref\_h}\right)T_s - 2\frac{V_{0\_r}}{V_{dc}}\cdot T_s (i_{sc} > 0)' \\ T_c = \frac{1}{3}\left(3 - u_{ref\_g} + u_{ref\_h}\right)T_s + 2\frac{V_{0\_r}}{V_{dc}}\cdot T_s (i_{sc} < 0) \end{cases}$$

$$IV \begin{cases} T_a = \frac{1}{3}\left(3 - 2u_{ref\_g} - u_{ref-h}\right)T_s + 2\frac{V_{0\_r}}{V_{dc}}\cdot T_s \\ T_b = \frac{1}{3}\left(3 - u_{ref\_g} + u_{ref\_h}\right)T_s - 2\frac{V_{0\_r}}{V_{dc}}\cdot T_s (i_{sb} > 0) \\ T_b = \frac{1}{3}\left(3 + u_{ref\_g} - u_{ref\_h}\right)T_s + 2\frac{V_{0\_r}}{V_{dc}}\cdot T_s (i_{sb} < 0) \\ T_c = \frac{1}{3}\left(3 - u_{ref\_g} - 2u_{ref\_h}\right)T_s - 2\frac{V_{0\_r}}{V_{dc}}\cdot T_s \end{cases}$$

$$V \begin{cases} T_a = \frac{1}{3}\left(3 + u_{ref\_g} - u_{ref\_h}\right)T_s - 2\frac{V_{0\_r}}{V_{dc}}\cdot T_s (i_{sa} > 0) \\ T_a = \frac{1}{3}\left(3 - u_{ref\_g} + u_{ref\_h}\right)T_s + 2\frac{V_{0\_r}}{V_{dc}}\cdot T_s (i_{sa} < 0) \\ T_b = \frac{1}{3}\left(3 - u_{ref\_g} - 2u_{ref\_h}\right)T_s + 2\frac{V_{0\_r}}{V_{dc}}\cdot T_s \\ T_c = \frac{1}{3}\left(3 - 2u_{ref\_g} - u_{ref\_h}\right)T_s - 2\frac{V_{0\_r}}{V_{dc}}\cdot T_s \end{cases}$$

$$VI \begin{cases} T_c = \frac{1}{3}\left(3 - 2u_{ref\_g} - u_{ref\_h}\right)T_s - 2\frac{V_{0\_r}}{V_{dc}}\cdot T_s \\ T_b = \frac{1}{3}\left(3 - 2u_{ref\_g} - u_{ref\_h}\right)T_s + 2\frac{V_{0\_r}}{V_{dc}}\cdot T_s \\ T_c = \frac{1}{3}\left(3 - u_{ref\_g} + u_{ref\_h}\right)T_s - 2\frac{V_{0\_r}}{V_{dc}}\cdot T_s (i_{sc} > 0) \\ T_c = \frac{1}{3}\left(3 + u_{ref\_g} - u_{ref\_h}\right)T_s + 2\frac{V_{0\_r}}{V_{dc}}\cdot T_s (i_{sc} < 0) \end{cases}$$

dans lequel $T_a$, $T_b$ et $T_c$ désignent les durées d'actionnement de commutation triphasées d'une région sectorielle correspondante ; $u_{ref\_g}$ désigne une composante de tension d'axe g d'une tension de référence dans le système de coordonnées gh, et $u_{ref\_h}$ désigne une composante de tension d'axe h de la tension de référence dans le système de coordonnées gh ; $T_s$ désigne la durée d'actionnement de commutation de chacun des dispositifs de commutation de puissance ; $V_{0\_r}$ désigne une tension de référence de séquence zéro ; $V_{0\_r}$ désigne la tension aux bornes d'un condensateur côté CC dans un circuit onduleur ; $i_{sa}$, $i_{sb}$ et $i_{sc}$ désignent les courants des branches auxquelles sont connectées les inductances de filtre triphasées, respectivement, et les sens positifs de $i_{sa}$, $i_{sb}$ et $i_{sc}$ sont tous définis comme des directions pointant vers l'onduleur.

6. Procédé selon la revendication 1, dans lequel l'obtention du courant harmonique à compenser et de la tension harmonique à compenser dans le réseau électrique comprend : l'obtention de courants harmoniques triphasés à compenser à un instant $t$ et de tensions harmoniques triphasées à compenser à l'instant $t$ en utilisant les équations :

$$i_{aN}^* = i_a - i_{a1}, i_{bN}^* = i_b - i_{b1}, i_{cN}^* = i_c - i_{c1}; u_{ac} = u_a - u_a^+, u_{bc} = u_b - u_b^+, u_{cc}$$
$$= u_c - u_c^+$$

dans lequel, $i_{aN}^*$, $i_{bN}^*$ et $i_{cN}^*$ désignent respectivement les courants harmoniques triphasés à compenser à l'instant $t$ ; $i_a$, $i_b$ et $i_c$ désignent respectivement les courants triphasés d'une boucle à verrouillage de phase à l'instant $t$, ; $i_{a1}$, $i_{b1}$ et $i_{c1}$ désignent respectivement les courants de séquence positive fondamentaux triphasés de la boucle à verrouillage de phase à l'instant $t$ ; $u_{ac}$, $u_{bc}$ et $u_{cc}$ désignent respectivement les tensions harmoniques triphasées à compenser à l'instant t ; $u_a^+$, $u_b^+$ et $u_c^+$ désignent respectivement les composantes de séquence positive de tension triphasée dans le réseau électrique à l'instant $t$ ; et $u_a$, $u_b$, $u_c$ désignent respectivement les tensions d'alimentation triphasées dans le réseau électrique à l'instant $t$.

7. Procédé selon la revendication 6, dans lequel $i_{a1}$, $i_{b1}$ et $i_{c1}$ désignent respectivement les courants de séquence positive fondamentaux triphasés de la boucle à verrouillage de phase à l'instant $t$, et sont obtenus par les équations :

$$\begin{cases} i_{a1} = i_{a1P} + i_{a1Q} \\ i_{b1} = i_{b1P} + i_{b1Q} \\ i_{c1} = i_{c1P} + i_{c1Q}, \end{cases}$$

$$\begin{cases} i_{a1Q} = G_Q e_a = I_{1amp} \sin \varphi_{1a} \cos \omega t \\ i_{b1Q} = G_Q e_b = I_{1amp} \sin \varphi_{1a} \cos (\omega t - 120°), \\ i_{c1Q} = G_Q e_c = I_{1amp} \sin \varphi_{1a} \cos (\omega t + 120°) \end{cases}$$

$$\begin{cases} i_{a1P} = G_P e_a = I_{1amp} \cos \varphi_{1a} \sin \omega t \\ i_{b1P} = G_P e_b = I_{1amp} \cos \varphi_{1a} \sin(\omega t - 120°) \\ i_{c1P} = G_P e_c = I_{1amp} \cos \varphi_{1a} \sin(\omega t + 120°) \end{cases}$$

dans lequel $i_{a1P}$, $i_{b1P}$ et $i_{c1P}$ désignent respectivement les composantes de courant actif de séquence positive fondamentales triphasées à l'instant $t$ ; $i_{a1Q}$, $i_{b1Q}$ et $i_{c1Q}$ désignent respectivement les composantes de courant réactif de séquence positive fondamentales triphasées à l'instant $t$ ; $G_P$ désigne une composante CC de conductance active obtenue en appliquant un filtrage passe-bas à une composante de conductance active triphasée de la boucle à verrouillage de phase à l'instant $t$ ; $G_Q$ désigne une composante CC de conductance réactive obtenue en effectuant le filtrage passe-bas sur une composante de conductance réactive triphasée de la boucle à verrouillage de phase à l'instant $t$ ; $e_a$, $e_b$ et $e_c$ désignent respectivement les tensions de référence triphasées de la boucle à verrouillage de phase à l'instant $t$ ; $I_{1amp}$ désigne une amplitude de courant de séquence positive de la boucle à verrouillage de phase ; $\varphi_{1a}$ désigne un angle entre une tension de phase $\alpha$ et un courant de séquence positive fondamental de phase $\alpha$ ; $\omega$ désigne une fréquence angulaire du réseau électrique, et $\omega t$ désigne un angle de phase variable du réseau électrique à l'instant t.

8. Procédé selon la revendication 1, dans lequel le calcul de la distorsion harmonique totale du courant et de la tension côté réseau électrique comprend le calcul d'une distorsion harmonique du courant et d'une distorsion harmonique de la tension par les équations :

$$THD_I = \frac{\sqrt{\sum_{k=2}^{n} I_k^2}}{I_1} \times 100\%, THD_U = \frac{\sqrt{\sum_{k=2}^{n} U_k^2}}{U_1} \times 100\%$$

dans lequel, $THD_I$ désigne la distorsion harmonique du courant, $I_k$ désigne une valeur effective d'un courant harmonique d'ordre $k$, $I_1$ désigne une valeur effective d'un courant fondamental, $THD_U$ désigne la distorsion harmonique de la tension, $U_k$ désigne une valeur effective d'une tension harmonique d'ordre k et $U_1$ désigne une valeur effective d'une tension fondamentale.

9. Appareil de détermination de niveau de qualité de puissance d'un réseau électrique, **caractérisé en ce qu'**il comprend :

un module d'acquisition (11), configuré pour obtenir un courant harmonique à compenser et une tension harmonique à compenser dans un réseau électrique ;

un premier module d'ajustement (12), configuré pour effectuer un traitement d'ajustement de courant sur le courant harmonique à compenser en fonction d'un résultat de comparaison entre le courant harmonique à compenser et un courant de compensation réel, afin d'obtenir un courant harmonique ajusté, dans lequel le courant de compensation réel comprend un courant de sortie réel d'un onduleur d'ajustement de courant ;

un second module d'ajustement (13), configuré pour effectuer un traitement d'ajustement de tension sur une tension harmonique à compenser en fonction de la tension harmonique à compenser et d'une durée d'actionnement de commutation cible préalablement obtenue, afin d'obtenir une tension harmonique ajustée, dans lequel la durée d'actionnement de commutation cible comprend une durée pendant laquelle une pluralité de groupes de dispositifs de commutation de puissance dans un filtre de puissance actif sont commandés pour être allumés ou éteints ;

un module de détermination (14), configuré pour déterminer un niveau de qualité de puissance cible pour le réseau électrique en fonction du courant harmonique ajusté et de la tension harmonique ajustée ;

dans lequel le module de détermination est en outre configuré pour :

effectuer un traitement de transformée de Fourier sur le courant harmonique ajusté et la tension harmonique ajustée, afin de calculer une distorsion harmonique totale d'un courant et d'une tension côté réseau électrique ;

déterminer si la distorsion harmonique totale satisfait ou non à un seuil de distorsion prédéfini ;

si oui, déterminer un niveau de qualité de puissance cible en fonction de la distorsion harmonique totale ;

sinon, utiliser $t + l\Delta t$ comme un nouveau $t$, utiliser $l + 1$ comme un nouveau $l$, et effectuer en continu une étape de calcul de la distorsion harmonique totale du courant et de la tension côté réseau électrique, jusqu'à ce que le niveau de qualité de puissance cible soit obtenu, dans lequel $l$ est un entier supérieur ou égal à 0, $l = 0,1,2,3$ et ainsi de suite, $l$ désigne le nombre de recalculs pour la distorsion harmonique totale, et une valeur initiale de $l$ est 0, et $\Delta t$ désigne un intervalle de temps prédéfini.

A harmonic current to be compensated and a harmonic voltage to be compensated in a power grid are obtained. S11

A current adjustment processing is performed on the harmonic current to be compensated according to a compared result of the harmonic current to be compensated and the actual compensating current, to obtain an adjusted harmonic current, where, the actual compensating current includes an actual output current of a current adjusting inverter. S12

A voltage adjustment processing is performed on a harmonic voltage to be compensated according to the harmonic voltage to be compensated and a pre-obtained object switch actuation duration, to obtain an adjusted harmonic voltage, where, the object switch actuation duration includes a duration when the plurality of power switch devices in the active power filter are controlled to be turned on or off. S13

An object power quality level for the power grid is determined according to the adjusted harmonic current and the adjusted harmonic voltage. S14

FIG. 1

Judge whether the harmonic current to be compensated is greater than the actual compensating current, and whether the current difference is greater than or equal to a preset current threshold. S121

NO

YES

if the harmonic current to be compensated is greater than the actual compensating current, and if the current difference is greater than or equal to the preset current threshold, the actual compensating current is controlled to be increased based on a PWM signal, and finally a first adjusted harmonic current is outputted. S122

if the harmonic current to be compensated is less than or equal to the actual compensating current, and if the current difference is less than the preset current threshold, the actual compensating current is controlled to be decreased based on the PWM signal, and finally a second adjusted harmonic current is outputted. S123

FIG. 2

A

B

FIG. 3

| A vector space formed by the *gh* coordinate system is divided into sector regions by taking 0 degree as a starting point and at an interval of a set angle, to obtain a plurality of sector regions. | S131 |

| A sector region switch actuation duration of each sector region is obtained, and one sector region switch actuation duration is selected from a plurality of obtained sector regions switch actuation durations to act as an object switch actuation duration. | S132 |

| The harmonic voltage to be compensated is inputted into a preset harmonic voltage adjusting circuit, and the output voltage of the harmonic voltage adjusting model circuit is used as an adjusted harmonic voltage. | S133 |

FIG. 4

FIG. 5

FIG. 6A

FIG. 6B

A Fourier transform processing is performed on the adjusted harmonic current and the adjusted harmonic voltage, to calculate a total harmonic distortion of a current and a voltage at a power grid side. — S141

Determine whether the total harmonic distortion satisfies a preset distortion threshold. — S142

NO

YES

The object power quality level is determined according to the total harmonic distortion. — S143

$t+l\Delta t$ is used as a new $t$, and $l+1$ is used as a new $l$, the step of calculating the total harmonic distortion of the current and the voltage at the power grid side is performed continuously, until the object power quality level is obtained. — S144

FIG. 7

Three phases reference voltages generated by a phase-lock loop and three phases currents of the phase-lock loop are determined. S111

A three-phase active conductance component generated by the phase-lock loop and the three-phase reactive conductance component generated by the phase-lock loop are determined according to the three phases reference voltages and the three phases currents. S112

An active conductance DC component and a reactive conductance DC component are determined according to the three-phase active conductance component and the three-phase reactive conductance component. S113

Three phases fundamental positive-sequence active current components and three phases fundamental positive-sequence reactive current components are obtained according to the active conductance DC component, the reactive conductance DC component, and the three phases reference voltages. S114

The harmonic current to be compensated is obtained according to the three phases currents, the three phases fundamental positive-sequence active current components, and the three phases fundamental positive-sequence reactive current components. S115

FIG. 8

Three phases power supply voltages in the power grid are obtained. / S21

A *dq0* coordinate system conversion processing is performed on the three phases power supply voltages, to obtain a d-axis positive-sequence component of the three phases power supply voltages in the *dq0* coordinate system and a q-axis positive-sequence component of the three phases power supply voltages in the *dq0* coordinate system. / S22

A low-pass filtering processing is performed on the d-axis positive-sequence component and the q-axis positive-sequence component, to obtain a d-axis DC component of the three phases power supply voltages and a q-axis DC component of the three phases power supply voltages. / S23

A *dq0* inverse transform processing is performed on the d-axis DC component and the q-axis DC component, to obtain the three phases positive-sequence components of the voltage in the power grid. / S24

The harmonic voltage to be compensated is determined according to the three phases positive-sequence components of the voltage in the power grid and the three phases power supply voltages. / S25

FIG. 9

A *g*-axis voltage component of the three phases power supply voltages in the *gh* coordinate system and an *h*-axis voltage component of the three phases power supply voltages in the *gh* coordinate system is determined according to the three phases power supply voltages in the power grid. / S1321

The sector region switch actuation duration for each sector region is determined according to a pre-acquired switch actuation duration of each power switch device, a zero-sequence reference voltage, a DC voltage in the power grid, the *g*-axis voltage component and the *h*-axis voltage component. / S1322

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10262337 A